# EUROPEAN PATENT APPLICATION

(11) **EP 3 640 501 A1**
(43) Date of publication of application: **22.04.2020**
(21) Application number: 19202964.3
(22) Date of filing: 14.10.2019
(51) Int. Cl.: F16H 37/02, F16H 61/662, F16H 61/04, F16H 63/50

(54) **CONTROL APPARATUS OF POWER TRANSMISSION SYSTEM FOR VEHICLE**

(30) Priority: 16.10.2018 JP 2018195440
(71) Applicant: TOYOTA JIDOSHA KABUSHIKI KAISHA, Toyota-shi, Aichi-ken, 471-8571 (JP)
(72) Inventor: HATTORI, Kunio, Aichi-ken, 471-8571 (JP); AYABE, Atsushi, Aichi-ken, 471-8571 (JP); OHGATA, Yusuke, Aichi-ken, 471-8571 (JP); OITA, Shinji, Aichi-ken, 471-8571 (JP); ISHIKAWA, Naoki, Aichi-ken, 471-8571 (JP); SAKAMOTO, Kazuya, Aichi-ken, 471-8571 (JP)
(74) Representative: D Young & Co LLP

(57) **Abstract**

A control apparatus of a power transmission system (16; 148; 178) for a vehicle includes an electronic control unit (100; 150; 180). When an input rotational speed of an input-side rotary member (68) is lower than an output rotational speed of an output-side rotary member (70) in a two-way clutch (TWC), and a shift request to form a shift stage in which the two-way clutch is switched to a lock mode is generated, the electronic control unit (100; 150; 180) switches the two-way clutch (TWC) to the lock mode, after the input rotational speed of the input-side rotary member (68) is made substantially equal to the output rotational speed of the output-side rotary member (70).

## Description

### BACKGROUND OF THE INVENTION

### 1. Field of the Invention

The invention relates to control of a power transmission system for a vehicle including a first power transmission path and a second power transmission path that are provided in parallel with each other, between an engine and drive wheels.

### 2. Description of Related Art

A power transmission system for a vehicle is known in which a first power transmission path having a first clutch, a gear mechanism, and a dog clutch, and a second power transmission path having a continuously variable transmission and a second clutch, are provided in parallel with each other, between an engine and drive wheels. One example of the power transmission system is described in WO 2013/176208 A1.

### SUMMARY OF THE INVENTION

In the power transmission system described in WO 2013/176208 A1, the dog clutch is provided on the first power transmission path. When the vehicle is brought into a traveling state in which the rotational speed of the gear mechanism is increased, the dog clutch is released, so that the gear mechanism is prevented from rotating at a high speed. However, the dog clutch of WO 2013/176208 A1 includes a synchro mechanism; thus, the number of components is increased, resulting in a high manufacturing cost.

Meanwhile, it may be considered to employ a two-way clutch, in place of the dog clutch, in order to reduce the cost. The two-way clutch is switchable between a mode (which will be called "one-way mode") in which the clutch serves as a one-way clutch that transmits power that acts in a vehicle forward direction, and cuts off power that acts in a vehicle backward direction, and a mode (which will be called "lock mode") in which the clutch transmits at least rotation in the vehicle backward direction. With this arrangement, when the vehicle is brought into a traveling state where the rotational speed of the gear mechanism is increased, the two-way clutch is switched to the one-way mode in which it functions as a one-way clutch, so that rotation is inhibited by the two-way clutch from being transmitted to the gear mechanism, and the gear mechanism is prevented from rotating at a high speed.

In the power transmission system configured as described above, if there is a large rotational speed difference between an input-side rotary member and an output-side rotary member of the two-way clutch when the two-way clutch is switched from the one-way mode to the lock mode during traveling, shock may be generated in a transition period of switching to the lock mode, due to the structure of the two-way clutch.

The present invention provides a control apparatus of a power transmission system for a vehicle in which a first power transmission path having a first clutch and a two-way clutch, and a second power transmission path having a continuously variable transmission and a second clutch, are provided in parallel with each other, between an engine and drive wheels, which control apparatus can reduce shock generated in a transition period of switching of the two-way clutch to the lock mode during vehicle traveling.

A control apparatus of a power transmission system for a vehicle is provided according to one aspect of the invention. The power transmission system includes a first power transmission path and a second power transmission path arranged in parallel with each other between an engine and drive wheels, a first clutch and an auxiliary clutch provided on the first power transmission path, and a continuously variable transmission and a second clutch provided on the second power transmission path. The first clutch is located closer to the engine than the auxiliary clutch in the first power transmission path, and the auxiliary clutch is a two-way clutch that is switchable at least between a one-way mode and a lock mode. The one-way mode is a mode to transmit power when the vehicle is in a driving state, and cut off power when the vehicle is in a driven state. The lock mode is a mode to transmit power when the vehicle is in the driving state and the driven state. The two-way clutch includes an input-side rotary member located closer to the engine in the first power transmission path, and an output-side rotary member located closer to the drive wheels in the first power transmission path. The control apparatus includes an electronic control unit configured to switch the two-way clutch to the lock mode, after making an input rotational speed of the input-side rotary member substantially equal to an output rotational speed of the output-side rotary member, when a shift request to form a shift stage in which the two-way clutch is switched to the lock mode is generated, in a condition where the input rotational speed is lower than the output rotational speed.

With the control apparatus of the power transmission system according to the above aspect of the invention, when a shift request to form a shift stage in which the two-way clutch is switched to the lock mode is generated, in the case where the input rotational speed of the input-side rotary member is lower than the output rotational speed of the output-side rotary member, the two-way clutch is switched to the lock mode, after the input rotational speed of the input-side rotary member is made substantially equal to the output rotational speed of the output-side rotary member. Thus, the two-way clutch is switched to the lock mode, in a condition where a rotational speed difference between the input rotational speed and the output rotational speed is reduced, and shock generated in a transition period of switching of the two-way clutch to the lock mode can be reduced.

In the control apparatus according to the above aspect of the invention, the electronic control unit may be configured to engage the first clutch, and execute torque increase control of the engine, in the case where the first clutch is in a released state when the shift request to form the shift stage in which the two-way clutch is switched to the lock mode is generated, and the electronic control unit may be configured to execute the torque increase control of the engine, in the case where the first clutch is in an engaged state when the shift request to form the shift stage in which the two-way clutch is switched to the lock mode is generated.

With the control apparatus as described above, when a shift request to form a shift stage in which the two-way clutch is switched to the lock mode is generated, the first clutch is engaged, so that power can be transmitted through the first clutch. In this condition, torque increase control of the engine is executed, so that torque of the engine is transmitted to the input-side rotary member of the two-way clutch via the first clutch, and the input rotational speed is increased. As a result, the input rotational speed of the input-side rotary member can be made substantially equal to the output rotational speed of the output-side rotary member. On the other hand, if the first clutch is engaged when the shift request is generated, the input rotational speed of the input-side rotary member can be increased with torque of the engine. It is thus possible to make the input rotational speed of the input-side rotary member substantially equal to the output rotational speed of the output-side rotary member, by executing torque increase control of the engine.

In the control apparatus as described above, the electronic control unit may be configured to temporarily reduce a torque capacity of the first clutch, immediately before switching the two-way clutch to the lock mode, in the case where the first clutch is in the engaged state at a point in time at which the two-way clutch is switched to the lock mode.

With the control apparatus as described above, when the first clutch is in the engaged state at the time when the two-way clutch is switched to the lock mode, the torque capacity of the first clutch is temporarily reduced, immediately before switching of the two-way clutch to the lock mode, so that torque that exceeds the torque capacity of the first clutch is prevented from being transmitted to the two-way clutch. Thus, shock generated in the transition period of switching of the two-way clutch to the lock mode can be further reduced.

In the control apparatus as described above, the electronic control unit may be configured to increase a torque capacity of the second clutch, while the input rotational speed of the input-side rotary member is increasing, before switching the two-way clutch to the lock mode.

With the control apparatus as described above, the torque capacity of the second clutch is increased, while the input rotational speed of the input-side rotary member is being increased, before the two-way clutch is switched to the lock mode, so that the rate of increase of the input rotational speed of the input-side rotary member is restricted. Thus, the controllability of the input rotational speed is improved, and shock generated in the transition period of switching of the two-way clutch to the lock mode can be further reduced.

In the control apparatus as described above, the electronic control unit may be configured to upshift the continuously variable transmission, while increasing the torque capacity of the second clutch.

With the control apparatus as described above, the rate of increase of the input rotational speed of the input-side rotary member can be restricted, by upshifting the continuously variable transmission, while increasing the torque capacity of the second clutch. Thus, shock generated in the transition period of switching of the two-way clutch to the lock mode can be further reduced.

In the control apparatus as described above, the electronic control unit may be configured to switch the two-way clutch to the lock mode, when a rotational speed difference between the output rotational speed of the output-side rotary member and the input rotational speed of the input-side rotary member becomes equal to or smaller than a synchronization determination threshold value that is set in advance for determining whether the input rotational speed is substantially equal to the output rotational speed.

With the control apparatus as described above, when the rotational speed difference between the output rotational speed and the input rotational speed becomes equal to or smaller than the synchronization determination threshold value that is set in advance for determining whether the input rotational speed becomes substantially equal to the output rotational speed, the two-way clutch is switched to the lock mode, so that shock generated in the transition period of switching of the two-way clutch to the lock mode can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view illustrating the general configuration of a vehicle to which the invention is applied, and also illustrating control functions and a principal part of a control system for various controls in the vehicle;
FIG. 2 is a cross-sectional view simply showing the structure of a two-way clutch of FIG. 1, more specifically, a circumferential part of the two-way clutch when it is placed in a one-way mode;
FIG. 3 is a cross-sectional view simply showing the structure of the two-way clutch of FIG. 1, more specifically, a circumferential part of the two-way clutch when it is placed in a lock mode;
FIG. 4 is an engagement operation table indicating engagement states of respective engagement devices for each operating position, which is selected with a shift lever as a shifting device included in the vehicle;
FIG. 5 is a flowchart illustrating a principal part of control operation of an electronic control unit of FIG. 1, more specifically, control operation performed when the operating position is switched to an M1 position during traveling in a D position or M2 position;
FIG. 6 is a time chart showing control results based on the flowchart of FIG. 5;
FIG. 7 is another time chart showing control results based on the flowchart of FIG. 5;
FIG. 8 is a function block diagram illustrating control functions of an electronic control unit that controls a vehicular power transmission system, according to another embodiment of the invention;
FIG. 9 is a flowchart illustrating a principal part of control operation of the electronic control unit of FIG. 8, more specifically, control operation performed when the operating position is switched to the M1 position, during traveling in the D position or M2 position;
FIG. 10 is a time chart indicating control results based on the flowchart of FIG. 9;
FIG. 11 is a function block diagram illustrating control functions of an electronic control unit that controls a vehicular power transmission system, according to a further embodiment of the invention;
FIG. 12 is a flowchart illustrating a principal part of control operation of the electronic control unit of FIG. 11, more specifically, control operation performed when the operating position is switched to the M1 position, during traveling in the D position or M2 position;
FIG. 13 is a time chart indicating control results based on the flowchart of FIG. 12;
FIG. 14 is another example of a time chart indicating control results based on the flowchart of FIG. 12;
FIG. 15 is a further example of a time chart indicating control results based on the flowchart of FIG. 12; and
FIG. 16 is a still another example of a time chart indicating control results based on the flowchart of FIG. 12.

### DETAILED DESCRIPTION OF EMBODIMENTS

Some embodiments of the invention will be described in detail with reference to the drawings. In the following embodiments, parts or components shown in the drawings are simplified or deformed as needed, and the ratios of dimensions, shapes, etc. of the respective parts or components are not necessarily accurately illustrated.

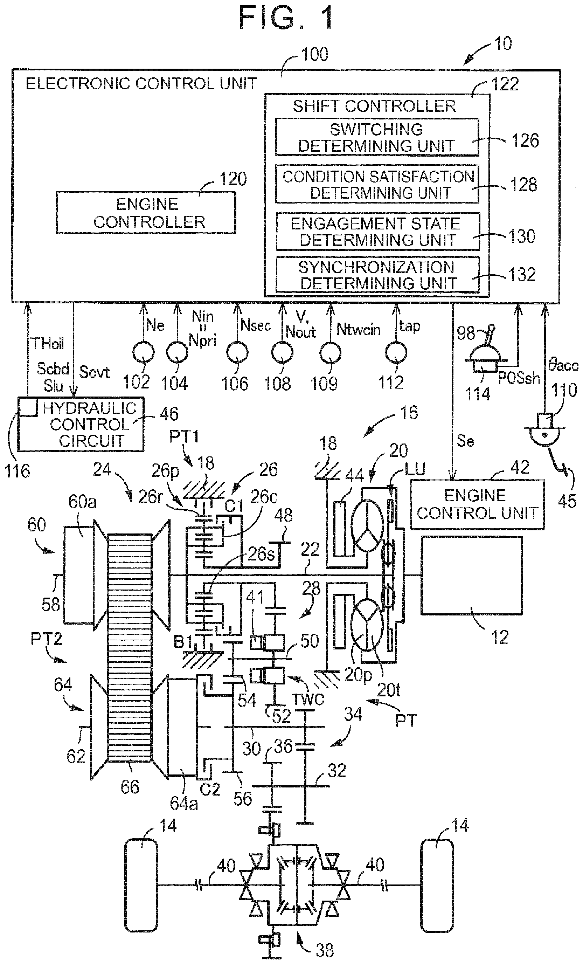

FIG. 1 illustrates the general configuration of a vehicle 10 to which this invention is applied, and also illustrates control functions and a principal part of a control system for various controls performed in the vehicle 10. In FIG. 1, the vehicle 10 includes a vehicular power transmission system 16 (which will be called "power transmission system 16") which transmits power of an engine 12 that functions as a power source, to drive wheels 14.

The power transmission system 16 is provided between the engine 12 and the drive wheels 14. The power transmission system 16 includes a known torque converter 20 as a fluid type transmission device coupled to the engine 12, input shaft 22 coupled to the torque converter 20, belt-type continuously variable transmission (which will be called "CVT") 24 coupled to the input shaft 22, forward/reverse drive switching device 26 also coupled to the input shaft 22, and a gear mechanism 28 connected to the input shaft 22 via the forward/reverse drive switching device 26 and provided in parallel with the CVT 24. The power transmission system 16 further includes an output shaft 30 as a common output rotary member of the CVT 24 and the gear mechanism 28, countershaft 32, reduction gear device 34, gear 36, and a differential device 38. The reduction gear device 34 consists of a pair of gears that mesh with each other and are relatively non-rotatably provided on the output shaft 30 and the countershaft 32, respectively. The gear 36 is relatively non-rotatably provided on the countershaft 32. The differential device 38 is coupled to the gear 36 such that power can be transmitted therebetween. The above-indicated components of the power transmission system 16 are housed in a case 18 as a non-rotary member. The power transmission system 16 further includes right and left axles 40 coupled to the differential device 38.

In the power transmission system 16 thus constructed, power generated from the engine 12 is transmitted to the right and left drive wheels 14, via the torque converter 20, forward/reverse drive switching device 26, gear mechanism 28, reduction gear device 34, differential device 38, axles 40, and so forth, in the order of description. Alternatively, in the power transmission system 16, power generated from the engine 12 is transmitted to the right and left drive wheels 14, via the torque converter 20, CVT 24, reduction gear device 34, differential device 38, axles 40, and so forth, in the order of description. The above-mentioned power is equivalent to torque or force when they are not particularly distinguished from each other.

In the power transmission system 16 as described above, the gear mechanism 28 and the CVT 24 are provided in parallel with each other on power transmission paths PT between the engine 12 and the drive wheels 14. Namely, the power transmission system 16 has two power transmission paths provided in parallel with each other between the input shaft 22 and the output shaft 30, and power of the engine 12 can be transmitted from the input shaft 22 to the output shaft 30, through each of the power transmission paths. The two power transmission paths include a first power transmission path PT1 through which power is transmitted via the gear mechanism 28, and a second power transmission path PT2 through which power is transmitted via the CVT 24. Namely, in the power transmission system 16, two power transmission paths, i.e., the first power transmission path PT1 and the second power transmission path PT2, are provided in parallel with each other, between the input shaft 22 and the output shaft 30.

The first power transmission path PT1 has the forward/reverse drive switching device 26 including a first clutch C1 and a first brake B1, gear mechanism 28, and a two-way clutch TWC that functions as an auxiliary clutch, and permits power of the engine 12 to be transmitted from the input shaft 22 to the drive wheels 14 via the gear mechanism 28. In the first power transmission path PT1, the forward/reverse drive switching device 26, gear mechanism 28, and two-way clutch TWC are arranged in this order, in a direction from the engine 12 to the drive wheels 14. Namely, the first clutch C1 is located closer to the engine 12 than the two-way clutch TWC. The second power transmission path PT2 has the CVT 24 and a second clutch C2, and permits power of the engine 12 to be transmitted from the input shaft 22 to the drive wheels 14 via the CVT 24. In the second power transmission path PT2, the CVT 24 and the second clutch C2 are arranged in this order, in the direction from the engine 12 to the drive wheels 14.

The gear mechanism 28 on the first power transmission path PT1 has a gear ratio EL (= input shaft rotational speed Nin / output shaft rotational speed Nout), which is set to a larger value than the lowest-shift speed ratio ymax of the CVT 24 as the maximum speed ratio on the second power transmission path PT2. Namely, the gear ratio EL is set to a lower-shift speed ratio than the lowest-shift speed ratio ymax. Thus, the second power transmission path PT2 provides higher-shift speed ratios than those of the first power transmission path PT1. The input shaft rotational speed Nin is the rotational speed of the input shaft 22, and the output shaft rotational speed Nout is the rotational speed of the output shaft 30.

The CVT 24 includes a primary shaft 58 provided on the same axis as the input shaft 22 and coupled integrally to the input shaft 22, a primary pulley 60 coupled to the primary shaft 58 and having a variable effective diameter, a secondary shaft 62 provided on the same axis as the output shaft 30, a secondary pulley 64 coupled to the secondary shaft 62 and having a variable effective diameter, and a transmission belt 66 that is looped around the pulleys 60, 64, and serves as a transmitting element. The CVT 24 is a known belt-type continuously variable transmission in which power is transmitted between each pulley 60, 64 and the transmission belt 66 via frictional force, and transmits power of the engine 12 toward the drive wheels 14. The effective diameter of the primary pulley 60 is changed by a hydraulic actuator 60a, and the effective diameter of the secondary pulley 64 is changed by a hydraulic actuator 64a.

In the power transmission system 16, the power transmission path PT through which power of the engine 12 is transmitted to the drive wheels 14 is switched between the first power transmission path PT1 and the second power transmission path PT2, according to traveling conditions of the vehicle 10. To this end, the power transmission system 16 includes two or more engagement devices for selectively forming the first power transmission path PT1 and the second power transmission path PT2. The engagement devices include the first clutch C1, first brake B1, second clutch C2, and two-way clutch TWC.

The first clutch C1 is an engagement device that is provided on the first power transmission path PT1, for selectively connecting or disconnecting the first power transmission path PT1. When the first clutch C1 is engaged while the vehicle is traveling forward, power can be transmitted through the first power transmission path PT1. The first brake B1 is an engagement device that is provided on the first power transmission path PT1, for selectively connecting or disconnecting the first power transmission path PT1. When the first brake B1 is engaged while the vehicle is traveling backward, power can be transmitted through the first power transmission path PT1. The first power transmission path PT1 is formed through engagement of the first clutch C1 or the first brake B1.

The two-way clutch TWC is provided on the first power transmission path PT1, and can be switched between a one-way mode and a lock mode. In the one-way mode, the two-way clutch TWC transmits power when the vehicle 10 is in a driving state during forward traveling, and cuts off power when the vehicle 10 is in a driven state during forward traveling. In the lock mode, the two-way clutch TWC transmits power when the vehicle 10 is in the driving state and it is in the driven state. For example, in a condition where the first clutch C1 is engaged, and the two-way clutch TWC is placed in the one-way mode, the two-way clutch TWC permits power to be transmitted therethrough, when the vehicle 10 is in the driving state and travels forward with power of the engine 12. Namely, during forward traveling, power of the engine 12 is transmitted to the drive wheels 14 via the first power transmission path PT1. On the other hand, when the vehicle 10 is in the driven state, such as when it is coasting, rotation transmitted from the drive wheels 14 is blocked by the two-way clutch TWC, even when the first clutch C1 is engaged. In this connection, the driving state of the vehicle 10 corresponds to a state in which torque of the input shaft 22 is a positive value as measured in the traveling direction as a reference direction, or substantially, a state in which the vehicle 10 is driven with power of the engine 12. The driven state of the vehicle 10 corresponds to a state in which torque of the input shaft 22 is a negative value as measured in the traveling direction as a reference direction, or substantially, a state in which the vehicle 10 travels with the inertia thereof, and the input shaft 22 and the engine 12 are rotated in accordance with rotation transmitted from the drive wheels 14.

In a condition where the first clutch C1 is engaged, and the two-way clutch TWC is placed in the lock mode, the two-way clutch TWC permits power to be transmitted when the vehicle 10 is in the driving state and it is in the driven state, and power of the engine 12 is transmitted to the drive wheels 14 via the first power transmission path PT1. While the vehicle is coasting (in the driven state), rotation transmitted from the drive wheels 14 is transmitted to the engine 12 via the first power transmission path PT1, so that an engine brake is generated. In a condition where the first brake B1 is engaged, and the two-way clutch TWC is placed in the lock mode, power that is transmitted from the engine 12 and acts in the vehicle backward direction is transmitted to the drive wheels 14 via the two-way clutch TWC, and the vehicle 10 can travel backward with power transmitted through the first power transmission path PT1. The structure of the two-way clutch TWC will be described later.

The second clutch C2 is an engagement device that is provided on the second power transmission path PT2, for selectively connecting or disconnecting the second power transmission path PT2. When the second clutch C2 is engaged while the vehicle is traveling forward, power can be transmitted through the second power transmission path PT2. Each of the first clutch C1, first brake B1, and second clutch C2 is a known hydraulic wet-type friction engagement device that is frictionally engaged by a hydraulic actuator. The first clutch C1 and the first brake B1 constitute the forward/reverse drive switching device 26.

The engine 12 includes an engine control unit 42 having various devices, such as an electronic throttle device, fuel injection device, and ignition device, which are needed for output control of the engine 12. The engine control unit 42 is controlled by an electronic control unit 100 that will be described later, according to an accelerator operation amount θacc as an operation amount of an accelerator pedal 45 corresponding to a drive amount required of the vehicle 10 by the driver, so that engine torque Te as output torque of the engine 12 is controlled.

The torque converter 20 is provided between the engine 12, and the CVT 24 and the forward/reverse drive switching device 26, and includes a pump impeller 20p coupled to the engine 12, and a turbine wheel 20t coupled to the input shaft 22. The torque converter 20 is a fluid transfer device that transmits power of the engine 12 to the input shaft 22. The torque converter 20 includes a known lock-up clutch LU disposed between the pump impeller 20p and the turbine wheel 20t, namely, between input and output rotary members of the torque converter 20, for directly connecting these members. The lock-up clutch LU directly connects the pump impeller 20p and the turbine wheel 20t (namely, the engine 12 and the input shaft 22), according to traveling conditions of the vehicle. For example, in a relatively high vehicle-speed region, the engine 12 and the input shaft 22 are directly connected to each other via the lock-up clutch LU.

The power transmission system 16 includes a mechanical oil pump 44 coupled to the pump impeller 20p. The oil pump 44 is rotated and driven by the engine 12, so as to supply an original pressure of hydraulic pressures for performing shift control on the CVT 24, generating belt clamping force in the CVT 24, switching operating states, such as engaged and released states, of each of the engagement devices, and switching the operating state of the lock-up clutch LU, to a hydraulic control circuit 46 included in the vehicle 10.

The forward/reverse drive switching device 26 includes a double pinion type planetary gear unit 26p, first clutch C1, and first brake B1. The planetary gear unit 26p is a differential mechanism having three rotating elements, i.e., a carrier 26c as an input element, a sun gear 26s as an output element, and a ring gear 26r as a reaction force element. The carrier 26c is coupled to the input shaft 22. The ring gear 26r is selectively coupled to the case 18 via the first brake B1. The sun gear 26s is coupled to a small-diameter gear 48 that is disposed radially outward of the input shaft 22, such that it can rotate relative to the input shaft 22. The carrier 26c and the sun gear 26s are selectively coupled to each other via the first clutch C1.

The gear mechanism 28 includes the small-diameter gear 48, a countershaft 50, and a large-diameter gear 52 that is rotatable relative to the countershaft 50 and meshes with the small-diameter gear 48. The countershaft 50 is provided with a counter gear 54 that meshes with an output gear 56 provided on the output shaft 30, such that the counter gear 54 cannot rotate relative to the countershaft 50.

The two-way clutch TWC is provided between the large-diameter gear 52 and the counter gear 54, as viewed in the axial direction of the countershaft 50. The two-way clutch TWC is located closer to the drive wheels 14 than the first clutch C1 and the gear mechanism 28, on the first power transmission path PT1. The two-way clutch TWC is switched to one of the one-way mode and the lock mode, by a hydraulic actuator 41 provided adjacent to the two-way clutch TWC in the axial direction of the countershaft 50.

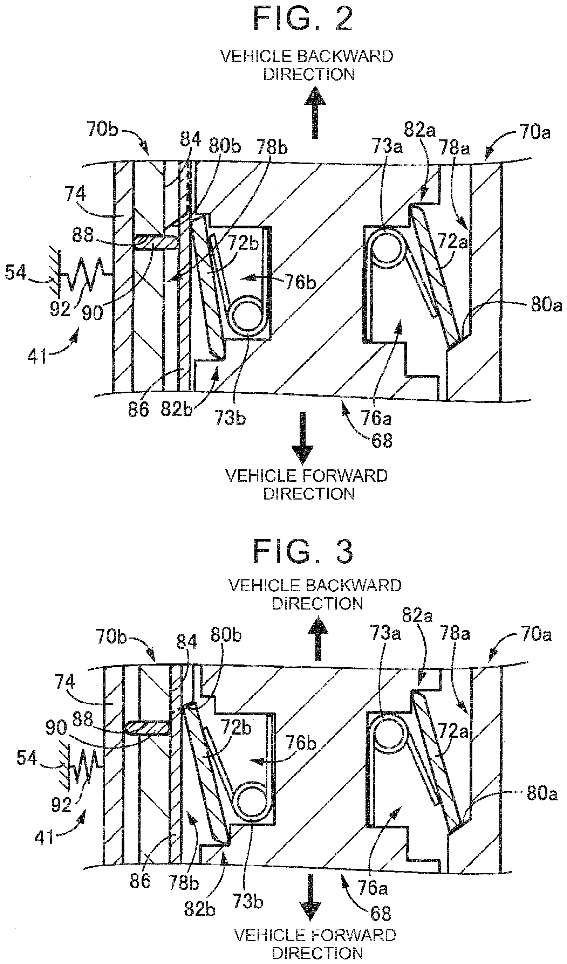

FIG. 2 and FIG. 3 are cross-sectional views of a circumferential part of the two-way clutch TWC, schematically showing the structure of the two-way clutch TWC that can be switched between the one-way mode and the lock mode. FIG. 2 shows a condition in which the two-way clutch TWC is placed in the one-way mode, and FIG. 3 shows a condition in which the two-way clutch TWC is placed in the lock mode. The vertical direction on the plane of paper having FIG. 2 and FIG. 3 corresponds to the rotational direction, and the upper side on the plane of paper corresponds to the vehicle backward direction (reverse rotational direction), while the lower side on the plane of paper corresponds to the vehicle forward direction (forward rotational direction). The lateral direction on the plane of paper having FIG. 2 and FIG. 3 corresponds to the axial direction of the countershaft 50 (in the following description, "axial direction" corresponds to the axial direction of the countershaft 50, unless otherwise specified), and the large-diameter gear 52 in FIG. 1 is located on the right-hand side on the plane of paper, while the counter gear 54 in FIG. 1 is located on the left-hand side on the plane of paper.

The two-way clutch TWC is formed in a disc-like shape, and is disposed radially outward of the countershaft 50. The two-way clutch TWC includes an input-side rotary member 68, first output-side rotary member 70a and second output-side rotary member 70b disposed adjacent to the input-side rotary member 68 in the axial direction, a plurality of first struts 72a and a plurality of torsion coil springs 73a interposed between the input-side rotary member 68 and the first output-side rotary member 70a in the axial direction, and a plurality of second struts 72b and a plurality of torsion coil springs 73b interposed between the input-side rotary member 68 and the second output-side rotary member 70b in the axial direction. The first output-side rotary member 70a and the second output-side rotary member 70b correspond to the output-side rotary member of the invention.

The input-side rotary member 68 is formed in a disc-like shape, and is disposed such that it can rotate relative to the countershaft 50, about the axis of the countershaft 50. The input-side rotary member 68 is sandwiched between the first output-side rotary member 70a and the second output-side rotary member 70b in the axial direction. Engaging teeth of the large-diameter gear 52 are integrally formed, on the radially outer side of the input-side rotary member 68. Namely, the input-side rotary member 68 and the large-diameter gear 52 are integrally formed. The input-side rotary member 68 is connected to the engine 12, via the gear mechanism 28, forward/reverse drive switching device 26, etc., such that power can be transmitted between the input-side rotary member 68 and the engine 12.

The input-side rotary member 68 has a plurality of first housing portions 76a formed in its face opposed to the first output-side rotary member 70a in the axial direction, such that the first housing portions 76a are arranged at equal angular intervals in the circumferential direction. The first struts 72a and the torsion coil springs 73a are housed in the first housing portions 76a. The input-side rotary member 68 also has a plurality of second housing portions 76b formed in its face opposed to the second output-side rotary member 70b in the axial direction, such that the second housing portions 76b are arranged at equal angular intervals in the circumferential direction. The second struts 72b and the torsion coil springs 73b are housed in the second housing portions 76b. The first housing portions 76a and the second housing portions 76b are formed at the same positions as viewed in radial directions of the input-side rotary member 68.

The first output-side rotary member 70a is formed in a disc-like shape, and is disposed such that it can rotate about the axis of the countershaft 50. The first output-side rotary member 70a cannot rotate relative to the countershaft 50, and rotates as a unit with the countershaft 50. In this connection, the first output-side rotary member 70a is coupled to the drive wheels 14, via the countershaft 50, counter gear 54, output shaft 30, differential device 38, etc., such that power can be transmitted between the first output-side rotary member 70a and the drive wheels 14.

The first output-side rotary member 70a has first recessed portions 78a formed in its face opposed to the input-side rotary member 68 in the axial direction, such that the first recessed portions 78a are recessed in directions away from the input-side rotary member 68. The same number of the first recessed portions 78a as that of the first housing portions 76a are formed and arranged at equal angular intervals in the circumferential direction. The first recessed portions 78a are formed at the same positions as the first housing portions 76a formed in the input-side rotary member 68, as viewed in the radial directions of the first output-side rotary member 70a. Accordingly, when the rotational positions of the first housing portions 76a coincide with those of the first recessed portions 78a, each of the first housing portions 76a and the corresponding first recessed portion 78a are located adjacent to each other in the axial direction. The first recessed portion 78a is shaped such that it can receive one end of the first strut 72a. Also, the first recessed portion 78a is formed at its one circumferential end with a first wall 80a that contacts with one end of the first strut 72a, when the input-side rotary member 68 rotates in the vehicle forward direction (downward in the plane of paper of FIG. 2 and FIG. 3), with the power of the engine 12.

The second output-side rotary member 70b is formed in a disc-like shape, and is disposed such that it can rotate about the axis of the countershaft 50. The second output-side rotary member 70b cannot rotate relative to the countershaft 50, and rotates as a unit with the countershaft 50. In this connection, the second output-side rotary member 70b is connected to the drive wheels 14, via the countershaft 50, counter gear 54, output shaft 30, differential device 38, etc., such that power can be transmitted between the second output-side rotary member 70b and the drive wheels 14.

The second output-side rotary member 70b has second recessed portions 78b formed in its face opposed to the input-side rotary member 68 in the axial direction, such that the second recessed portions 78b are recessed in directions away from the input-side rotary member 68. The same number of the second recessed portions 78b as that of the second housing portions 76b are formed, and arranged at equal angular intervals in the circumferential direction. The second recessed portions 78b are formed at the same positions as the second housing portions 76b formed in the input-side rotary member 68, as viewed in radial directions of the second output-side rotary member 70b. Accordingly, when the rotational positions of the second housing portions 76b coincide with those of the second recessed portions 78b, each of the second housing portions 76b and the corresponding second recessed portion 78b are located adjacent to each other in the axial direction. The second recessed portion 78b is shaped such that it can receive one end of the second strut 72b. Also, the second recessed portion 78b is formed at its one end in the circumferential direction with a second wall 80b. The second wall 80b contacts with one end of the second strut 72b, when the input-side rotary member 68 rotates in the vehicle backward direction (upward on the plane of paper of FIG. 2 and FIG. 3) with the power of the engine 12, and when the vehicle 10 coasts during forward traveling, in a condition where the two-way clutch TWC shown in FIG. 3 is placed in the lock mode.

The first strut 72a is a plate-like member having a given thickness, and extends along the rotational direction (vertical direction on the plane of paper) as its longitudinal direction, as shown in the cross-sectional views of FIG. 2 and FIG. 3. Also, the first strut 72a has a given dimension in a direction perpendicular to the plane of paper in FIG. 2 and FIG. 3.

One longitudinal end of the first strut 72a is biased by the torsion coil spring 73a toward the first output-side rotary member 70a. The other longitudinal end of the first strut 72a abuts against a first stepped portion 82a formed in the first housing portion 76a. The first strut 72a can pivot about the other end that abuts against the first stepped portion 82a. The torsion coil spring 73a is interposed between the first strut 72a and the input-side rotary member 68, and biases one end of the first strut 72a toward the first output-side rotary member 70a.

With the above arrangement, when power that acts in the vehicle forward direction is transmitted from the engine 12, in a condition where the two-way clutch TWC is placed in the one-way mode and the lock mode, one end of the first strut 72a abuts against the first wall 80a of the first output-side rotary member 70a, and the other end of the first strut 72a abuts against the first stepped portion 82a of the input-side rotary member 68. In this condition, the input-side rotary member 68 and the first output-side rotary member 70a are inhibited from rotating relative to each other, and power that acts in the vehicle forward direction is transmitted to the drive wheels 14 via the two-way clutch TWC. The first strut 72a, torsion coil spring 73a, first housing portion 76a, and first recessed portion 78a (first wall 80a) constitute a one-way clutch that transmits power applied in the vehicle forward direction to the drive wheels 14, and cuts off power applied in the vehicle backward direction.

The second strut 72b is a plate-like member having a given thickness, and extends along the rotational direction (vertical direction on the plane of paper) as its longitudinal direction, as shown in the cross-sectional views of FIG. 2 and FIG. 3. Also, the second strut 72b has a given dimension in a direction perpendicular to the plane of paper in FIG. 2 and FIG. 3.

One longitudinal end of the second strut 72b is biased by the torsion coil spring 73b toward the second output-side rotary member 70b. The other longitudinal end of the second strut 72b abuts against a second stepped portion 82b formed in the second housing portion 76b. The second strut 72b can pivot about the other end that is in abutting contact with the second stepped portion 82b. The torsion coil spring 73b is interposed between the second strut 72b and the input-side rotary member 68, and biases one end of the second strut 72b toward the second output-side rotary member 70b.

With the above arrangement, when power that acts in the vehicle backward direction is transmitted from the engine 12, in a condition where the two-way clutch TWC is placed in the lock mode, one end of the second strut 72b abuts against the second wall 80b of the second output-side rotary member 70b, and the other end of the second strut 72b abuts against the second stepped portion 82b of the input-side rotary member 68. Also, when the vehicle 10 coasts during forward traveling, too, one end of the second strut 72b abuts against the second wall 80b of the second output-side rotary member 70b, and the other end of the second strut 72b abuts against the second stepped portion 82b of the input-side rotary member 68. In this condition, the input-side rotary member 68 and the second output-side rotary member 70b are inhibited from rotating relative to each other, and power that acts in the vehicle backward direction is transmitted to the drive wheels 14 via the two-way clutch TWC. Also, rotation transmitted from the drive wheels 14 during coasting is transmitted to the engine 12 via the two-way clutch TWC. The second strut 72b, torsion coil spring 73b, second housing portion 76b, and second recessed portion 78b (second wall 80b) constitute a one-way clutch that transmits power that acts in the vehicle backward direction to the drive wheels 14, and cuts off power that acts in the vehicle forward direction.

The second output-side rotary member 70b is formed with a plurality of through-holes 88 that extends through the second output-side rotary member 70b in the axial direction. Each of the through-holes 88 is formed at a position aligned with the corresponding second recessed portion 78b as viewed in the axial direction of the countershaft 50. Thus, one end of each through-hole 88 communicates with the corresponding second recessed portion 78b. A pin 90 is inserted through each of the through-holes 88. The pin 90 is formed in a columnar shape, and is slidable in the through-hole 88. One end of the pin 90 abuts against a pressing plate 74 that constitutes the hydraulic actuator 41, and the other end of the pin 90 abuts against an annular ring 86 of which a circumferential part passes the second recessed portion 78b.

The ring 86 is fitted in a plurality of arcuate grooves 84 that are formed so as to connect circumferentially adjacent ones of the second recessed portions 78b formed in the second output-side rotary member 70b. The ring 86 is allowed to move relative to the second output-side rotary member 70b in the axial direction.

The hydraulic actuator 41 is disposed on the countershaft 50 on which the two-way clutch TWC is disposed, and is located at a position adjacent to the second output-side rotary member 70b in the axial direction of the countershaft 50. The hydraulic actuator 41 includes the pressing plate 74, a plurality of coil springs 92 interposed between the counter gear 54 and the pressing plate 74 in the axial direction, and a hydraulic chamber (not shown) to which hydraulic oil is supplied so as to generate thrust force that moves the pressing plate 74 toward the counter gear 54 in the axial direction.

The pressing plate 74 is formed in a disc-like shape, and is movable relative to the countershaft 50 in the axial direction. The spring 92 biases the pressing plate 74 toward the second output-side rotary member 70b in the axial direction. Accordingly, when no hydraulic oil is supplied to the hydraulic chamber of the hydraulic actuator 41, the pressing plate 74 is moved toward the second output-side rotary member 70b in the axial direction, under the bias force of the spring 92, as shown in FIG. 2, so that the pressing plate 74 is brought into contact with the second output-side rotary member 70b. At this time, as shown in FIG. 2, the pin 90, ring 86, and one end of the second strut 72b are moved toward the input-side rotary member 68 in the axial direction, so that the two-way clutch TWC is switched to the one-way mode.

When hydraulic oil is supplied to the hydraulic chamber of the hydraulic actuator 41, the pressing plate 74 is moved toward the counter gear 54 in the axial direction, against the bias force of the spring 92, so that the pressing plate 74 is spaced apart from the second output-side rotary member 70b. At this time, as shown in FIG. 3, the pin 90, ring 86, and one end of the second strut 72b are moved toward the counter gear 54 in the axial direction, under the bias force of the torsion coil spring 73b, so that the two-way clutch TWC is switched to the lock mode.

When the two-way clutch TWC is in the one-way mode as shown in FIG. 2, the pressing plate 74 is in contact with the second output-side rotary member 70b under the bias force of the spring 92. At this time, the pin 90 is pushed by the pressing plate 74, and moved toward the input-side rotary member 68 in the axial direction, and the ring 86 is also pushed by the pin 90, and moved toward the input-side rotary member 68 in the axial direction. As a result, one end of the second strut 72b is pressed against the ring 86 and moved toward the input-side rotary member 68, so that the one end of the second strut 72b is inhibited from abutting against the second wall 80b. At this time, the input-side rotary member 68 and the second output-side rotary member 70b are allowed to rotate relative to each other, and the second strut 72b ceases to function as a one-way clutch. On the other hand, one end of the first strut 72a is biased by the torsion coil spring 73a, toward the first output-side rotary member 70a, so that the one end can abut against the first wall 80a of the first recessed portion 78a. Thus, the first strut 72a functions as a one-way clutch that transmits driving force that acts in the vehicle forward direction.

When the two-way clutch TWC is in the one-way mode as shown in FIG. 2, one end of the first strut 72a can abut against the first wall 80a of the first output-side rotary member 70a. Thus, when the vehicle 10 is in a driving state in which power that acts in the vehicle forward direction is transmitted from the engine 12 to the two-way clutch TWC, one end of the first strut 72a abuts against the first wall 80a, and the other end of the first strut 72a abuts against the first stepped portion 82a, as shown in FIG. 2, so that the input-side rotary member 68 and the first output-side rotary member 70a are inhibited from rotating relative to each other, and power of the engine 12 is transmitted to the drive wheels 14 via the two-way clutch TWC. On the other hand, when the vehicle 10 coasts during forward traveling, and the vehicle 10 is placed in a driven state, one end of the first strut 72a does not contact with the first wall 80a of the first output-side rotary member 70a, and the input-side rotary member 68 and the first output-side rotary member 70a are allowed to rotate relative to each other, so that power transmission via the two-way clutch TWC is interrupted. Thus, when the two-way clutch TWC is in the one-way mode, the first strut 72a functions as a one-way clutch, and power is transmitted while the vehicle 10 is in the driving state in which power that acts in the vehicle forward direction is transmitted from the engine 12, whereas power is cut off while the vehicle 10 is coasting during forward traveling and is placed in the driven state.

When the two-way clutch TWC is in the lock mode as shown in FIG. 3, hydraulic oil is supplied to the hydraulic chamber of the hydraulic actuator 41, so that the pressing plate 74 is moved away from the second output-side rotary member 70b, against the bias force of the spring 92. At this time, one end of the second strut 72b is moved toward the second recessed portion 78b of the second output-side rotary member 70b, under the bias force of the torsion coil spring 73b, and becomes able to abut against the second wall 80b. Also, one end of the first strut 72a can abut against the first wall 80a of the first output-side rotary member 70a, as in the one-way mode shown in FIG. 2.

When power that acts in the vehicle forward direction is transmitted to the two-way clutch TWC while it is in the lock mode as shown in FIG. 3, one end of the first strut 72a abuts against the first wall 80a of the first output-side rotary member 70a, and the other end of the first strut 72a abuts against the first stepped portion 82a, so that the input-side rotary member 68 and the first output-side rotary member 70a are inhibited from rotating relative to each other in the vehicle forward direction. When power that acts in the vehicle backward direction is transmitted to the two-way clutch TWC while it is in the lock mode, one end of the second strut 72b abuts against the second wall 80b of the second output-side rotary member 70b, and the other end of the second strut 72b abuts against the second stepped portion 82b, as shown in FIG. 3, so that the input-side rotary member 68 and the second output-side rotary member 70b are inhibited from rotating relative to each other in the vehicle backward direction. Thus, when the two-way clutch TWC is in the lock mode, the first strut 72a and the second strut 72b respectively function as one-way clutches, and power that acts in the vehicle forward direction and power that acts in the vehicle backward direction can be transmitted to the drive wheels 14. Thus, when the two-way clutch TWC is switched to the lock mode, the vehicle 10 becomes able to travel backward. Also, when the vehicle 10 is in the driven state and is coasting during forward traveling, the two-way clutch TWC is switched to the lock mode, and rotation transmitted from the drive wheels 14 is transmitted to the engine 12 via the two-way clutch TWC, so that the engine 12 is rotated in accordance with the rotation, and an engine brake is generated. Thus, when the two-way clutch TWC is in the lock mode, the first strut 72a and the second strut 72b function as one-way clutches, and power is transmitted when the vehicle 10 is in the driving state and driven state.

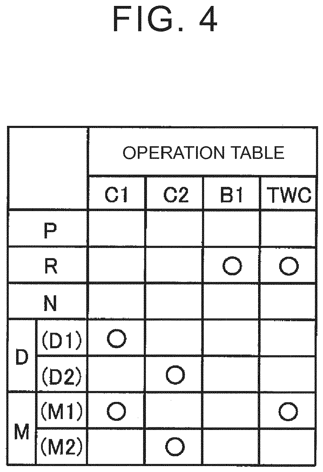

FIG. 4 is an engagement operation table indicating engagement states of respective engagement devices for each operating position POSsh selected with a shift lever 98 as a shifting device included in the vehicle 10. In FIG. 4, "C1" denotes the first clutch C1, "C2" denotes the second clutch C2, "B1" denotes the first brake B1, and "TWC" denotes the two-way clutch TWC. Also, "P (P position)", "R (R position)", "N (N position)", "D (D position)", and "M (M position)" indicate respective operating positions POSsh selected with the shift lever 98. In FIG. 4, "O" indicates the engaged state of each engagement device, and blank space indicates the released state. In "TWC" denoting the two-way clutch TWC, "O" indicates switching of the two-way clutch TWC to the lock mode, and blank space indicates switching of the two-way clutch TWC to the one-way mode.

For example, when the operating position POSsh of the shift lever 98 is switched to the P position as a vehicle stop position, or the N position as a power transmission interruption position, the first clutch C1, second clutch C2, and first brake B1 are released, as shown in FIG. 4. At this time, the first power transmission path PT1 and the second power transmission path PT2 are both placed in a neutral state in which no power is transmitted.

When the operating position POSsh of the shift lever 98 is switched to the R position as a reverse-drive position, the first brake B1 is engaged, and the two-way clutch TWC is switched to the lock mode, as shown in FIG. 4. With the first brake B1 thus engaged, power that acts in the backward direction is transmitted from the engine 12 to the gear mechanism 28. If the two-way clutch TWC is in the one-way mode at this time, the power is cut off by the two-way clutch TWC, and the vehicle 10 cannot travel backward. Accordingly, the two-way clutch TWC is switched to the lock mode, so that power that acts in the vehicle backward direction is transmitted to the output shaft 30 via the two-way clutch TWC, thus enabling the vehicle 10 to travel backward. Thus, when the operating position POSsh is switched to the R position, the first brake B1 is engaged, and the two-way clutch TWC is switched to the lock mode, so that a reverse gear stage is formed in which power that acts in the vehicle backward direction is transmitted via the first power transmission path PT1 (gear mechanism 28).

When the operating position POSsh of the shift lever 98 is switched to the D position as a forward-drive position, the first clutch C1 is engaged, or the second clutch C2 is engaged, as shown in FIG. 4. "D1 (D1 position)" and "D2 (D2 position)" shown in FIG. 4 are hypothetical operating positions set for use in control; when the operating position POSsh is switched to the D position, it is automatically switched to the D1 position or D2 position, depending on traveling conditions of the vehicle 10. The operating position POSsh is switched to the D1 position when the vehicle 10 is in a relatively low vehicle-speed region, including the case where the vehicle is stopped. The operating position POSsh is switched to the D2 position when the vehicle 10 is in a relatively high vehicle-speed region including a middle vehicle-speed region. For example, when the vehicle 10 shifts from the low vehicle-speed region to the high vehicle-speed region, during traveling in the D position, the operating position (POSsh) is automatically switched from the D1 positon to the D2 position.

For example, when the traveling conditions of the vehicle 10 are in a traveling region corresponding to the D1 position when the operating position POSsh is switched to the D position, the first clutch C1 is engaged, and the second clutch C2 is released. At this time, the vehicle 10 is placed in a gear traveling mode in which power that acts in the vehicle forward direction is transmitted from the engine 12 to the drive wheels 14 via the first power transmission path PT1 (gear mechanism 28). The two-way clutch TWC, which is placed in the one-way mode, transmits power that acts in the vehicle forward direction.

When the traveling conditions of the vehicle 10 are in a traveling region corresponding to the D2 position when the operating position POSsh is switched to the D position, the first clutch C1 is released, and the second clutch C2 is engaged. At this time, the vehicle 10 is placed in a belt traveling mode in which power that acts in the vehicle forward direction is transmitted from the engine 12 to the drive wheels 14 via the second power transmission path PT2 (the CVT 24). Thus, when the operating position POSsh is switched to the D position, power of the engine 12 is transmitted to the drive wheels 14, via the first power transmission path PT1 (the gear mechanism 28) or the second power transmission path PT2 (the CVT 24), depending on the traveling conditions of the vehicle 10.

When the operating position POSsh of the shift lever 98 is switched to the M position, upshift or downshift can be selected through manual operation of the driver. Namely, the M position is a manual shift position in which the speed ratio can be changed by manual operation of the driver. For example, when manual operation to the downshift side is performed by the driver, in a condition where the operating position POSsh is switched to the M position, a forward gear stage is formed in which the first clutch C1 is engaged, and the two-way clutch TWC is switched to the lock mode. With the two-way clutch TWC thus placed in the lock mode, power can be transmitted through the two-way clutch TWC when the vehicle 10 is in the driving state and in the driven state. For example, during coasting, the vehicle 10 is in the driven state in which rotation is transmitted from the drive wheels 14; if manual operation to the downshift side is performed in the M position at this time, rotation transmitted from the drive wheels 14 is transmitted to the engine 12 via the two-way clutch TWC, so that the engine 12 is rotated in accordance with the rotation, and an engine brake is generated. Thus, when downshifting is performed while the operating position POSsh is the M position, a forward gear stage is formed in which power is transmitted to the drive wheels 14 via the first power transmission path PT1 (the gear mechanism 28), and, during coasting, rotation transmitted from the drive wheels 14 is transmitted to the engine 12 via the first power transmission path PT1, so that the engine brake can be generated.

When manual operation to the upshift side is performed by the driver, in a condition where the operating position POSsh of the shift lever 98 is switched to the M position, the second clutch C2 is engaged. At this time, a forward stepless shift stage is formed in which power is transmitted to the drive wheels 14 via the second power transmission path PT2 (the CVT 24). Thus, when the operating position POSsh is switched to the M position, the power transmission system can be manually shifted to one of the forward gear stage (namely, the gear traveling mode) in which power is transmitted via the first power transmission path PT1, and the forward stepless shift stage (namely, the belt traveling mode) in which power is transmitted via the second power transmission path PT2, through manual operation of the driver. The case where downshift is selected when the operating position POSsh is the M position corresponds to the M1 position in FIG. 4, and the case where upshift is selected when the operating position POSsh is the M position corresponds to the M2 position in FIG. 4. While the M1 position and the M2 position are not apparently present, it will be stated, for descriptive purposes, that the operating position POSsh is switched to the M1 position when manual operation to the downshift side is performed while the operating position POSsh is the M position, and it will be stated, for descriptive purposes, that the operating position POSsh is switched to the M2 position when manual operation to the upshift side is performed while the operating position POSsh is the M position.

Referring back to FIG. 1, the vehicle 10 includes an electronic control unit 100 that serves as a controller including a control unit of the power transmission system 16. The electronic control unit 100 includes a so-called microcomputer having a central processing unit (CPU), random access memory (RAM), read-only memory (ROM), input-output interface, etc., and the CPU performs signal processing according to programs stored in advance in the ROM, while utilizing the temporary storage function of the RAM, so as to perform various controls on the vehicle 10. The electronic control unit 100 performs output control of the engine 12, shift control and belt clamping force control of the CVT 24, hydraulic control for switching the operating state of each of the engagement devices (C1, B1, C2, TWC), and so forth. The electronic control unit 100 is divided as needed into a sub-unit for engine control, sub-unit for hydraulic control, and so forth.

The electronic control unit 100 is supplied with various detection signals, etc. obtained by various sensors, etc. included in the vehicle 10. The sensors include various rotational speed sensors 102, 104, 106, 108, 109, accelerator operation amount sensor 110, throttle opening sensor 112, shift position sensor 114, oil temperature sensor 116, and so forth. The above-mentioned detection signals include, for example, the engine speed Ne, primary pulley rotational speed Npri having the same value as the input shaft rotational speed Nin, secondary pulley rotational speed Nsec, output shaft rotational speed Nout corresponding to the vehicle speed V, input rotational speed Ntwcin of the input-side rotary member 68 that constitutes the two-way clutch TWC, accelerator operation amount θacc of the accelerator pedal 45 representing the magnitude of accelerating operation of the driver, throttle opening tap, operating position POSsh of the shift lever 98 as the shifting device included in the vehicle 10, hydraulic oil temperature THoil as a temperature of hydraulic oil in the hydraulic control circuit 46, and so forth. The input shaft rotational speed Nin (= primary pulley rotational speed Npri) is also the turbine speed NT. The electronic control unit 100 calculates the actual speed ratio ycvt (=Npri/Nsec) as the actual speed ratio ycvt of the CVT 24, based on the primary pulley rotational speed Npri and the secondary pulley rotational speed Nsec. Also, the electronic control unit 100 calculates the output rotational speed Ntwcout of the first output-side rotary member 70a and the second output-side rotary member 70b (which will be called "output-side rotary member 70" when they are not particularly distinguished from each other) which constitute the two-way clutch TWC, based on the output shaft rotational speed Nout.

The electronic control unit 100 generates various command signals to respective devices (e.g., the engine control unit 42, hydraulic control circuit 46, etc.) included in the vehicle 10. The command signals include, for example, an engine control command signal Se for controlling the engine 12, hydraulic control command signal Scvt for controlling the speed ratio, belt clamping force, etc. of the CVT 24, hydraulic control command signal Scbd for controlling the operating state of each of the engagement devices, hydraulic control command signal Slu for controlling the operating state of the lock-up clutch LU, and so forth.

In response to these various command signals, the hydraulic control circuit 46 generates an SL1 hydraulic pressure Psl1 as a hydraulic pressure supplied to a hydraulic actuator of the first clutch C1, B1 control pressure Pb1 as a hydraulic pressure supplied to a hydraulic actuator of the first brake B1, SL2 hydraulic pressure Psl2 as a hydraulic pressure supplied to a hydraulic actuator of the second clutch C2, TWC hydraulic pressure Ptwc as a hydraulic pressure supplied to the hydraulic actuator 41 that switches the mode of the two-way clutch TWC, primary pressure Ppri supplied to the hydraulic actuator 60a of the primary pulley 60, secondary pressure Psec supplied to the hydraulic actuator 64a of the secondary pulley 64, LU pressure Plu for controlling the lock-up clutch LU, and so forth. In this connection, each of the SL1 hydraulic pressure Psl1, SL2 hydraulic pressure Psl2, B1 control pressure Pb1, TWC hydraulic pressure Ptwc, primary pressure Ppri, secondary pressure Psec, and LU pressure Plu is directly or indirectly regulated by an electromagnetic valve (not shown) included in the hydraulic control circuit 46.

The electronic control unit 100 functionally includes an engine controller 120 that functions as an engine control means, and a shift controller 122 that functions as a shift control means, so as to implement various controls in the vehicle 10.

The engine controller 120 calculates the required driving force Fdem, by applying the accelerator operation amount θacc and the vehicle speed V to a driving force map, for example, as a predetermined relationship empirically obtained or computed in design in advance. The engine controller 120 sets a target engine torque Tet that provides the required driving force Fdem, and outputs a command to control the engine 12 so as to provide the target engine torque Tet, to the engine control unit 42.

When the operating position POSsh is switched from the P position or N position to the D position while the vehicle is stopped, for example, the shift controller 122 outputs a command to engage the first clutch C1, to the hydraulic control circuit 46. As a result, the vehicle 10 is switched to a forward gear traveling mode in which it can travel forward with power transmitted via the first power transmission path PT1. Also, when the operating position POSsh is switched from the P position or N position to the R position, during vehicle stop, the shift controller 122 outputs a command to engage the first brake B1 and switch the two-way clutch TWC to the lock mode, to the hydraulic control circuit 46. As a result, the vehicle 10 is switched to a reverse gear traveling mode in which it can travel backward with power transmitted via the first power transmission path PT1.

While the vehicle 10 is traveling in the belt traveling mode with power transmitted via the second power transmission path PT2, for example, the shift controller 122 outputs a command to control the speed ratio γ of the CVT 24 to a target speed ratio γtgt calculated based on the accelerator operation amount θacc, vehicle speed V, etc., to the hydraulic control circuit 46. More specifically, the shift controller 122 stores a predetermined relationship (e.g., a shift map) that achieves the target speed ratio ytgt of the CVT 24 at which the operating point of the engine 12 lies on a given optimum line (e.g., engine optimum fuel economy line), while adjusting the belt clamping force of the CVT 24 to the optimum value. From this relationship, the shift controller 122 determines a primary command pressure Ppritgt as a command value of the primary pressure Ppri supplied to the hydraulic actuator 60a of the primary pulley 60, and a secondary command pressure Psectgt as a command value of the secondary pressure Psec supplied to the hydraulic actuator 64a of the secondary pulley 64, based on the accelerator operation amount θacc, vehicle speed V, etc. Then, the shift controller 122 outputs a command to control the primary pressure Ppri and the secondary pressure Psec to be equal to the primary command pressure Ppritgt and the secondary command pressure Psectgt, respectively, to the hydraulic control circuit 46, so as to change the speed ratio of the CVT 24. The shift control of the CVT 24 is a known technology, and therefore, will not be described in detail.

When the operating position POSsh is the D position, the shift controller 122 performs switching control for switching between the gear traveling mode and the belt traveling mode. More specifically, the shift controller 122 stores a shift map as a predetermined relationship used for switching between a first shift stage corresponding to the gear ratio EL of the gear mechanism 28 in the gear traveling mode, and a second shift stage corresponding to the lowest-shift speed ratio ymax of the CVT 24 in the belt traveling mode. The shift map consists of the vehicle speed V, accelerator operation amount θacc, etc., and an upshift line used for determining an upshift to the second shift stage, namely, switching to the belt traveling mode, and a downshift line used for determining a downshift to the first shift stage, namely, switching to the gear traveling mode, are set on the shift map. The shift controller 122 determines whether a shift is needed, by applying the actual vehicle speed V and accelerator operation amount θacc to the shift map, and executes shifting (namely, switching of the traveling mode), based on the result of the determination. For example, when the operating point of the vehicle 10 passes the downshift line, during traveling in the belt traveling mode, a downshift to the first shift stage (the gear traveling mode) is determined (a downshift is requested). When the operating point passes the upshift line, during traveling in the gear traveling mode, an upshift to the second shift stage (belt traveling mode) is determined (an upshift is requested). The gear traveling mode corresponds to the D1 position in FIG. 4, and the belt traveling mode corresponds to the D2 position in FIG. 4.

When it is determined to execute an upshift for switching to the belt traveling mode (corresponding to the D2 position), during traveling in the gear traveling mode (corresponding to the D1 position) with the operating position POSsh being the D position, for example, the shift controller 122 outputs a command to release the first clutch C1 and engage the second clutch C2, to the hydraulic control circuit 46. As a result, the power transmission path PT in the power transmission system 16 is switched from the first power transmission path PT1 to the second power transmission path PT2. Thus, the shift controller 122 switches (upshifts) the power transmission system 16 from the gear traveling mode in which power is transmitted via the first power transmission path PT1, to the belt traveling mode in which power is transmitted via the second power transmission path PT2, through stepped shift control by releasing the first clutch C1 and engaging the second clutch C2.

When the traveling mode is switched to the belt traveling mode, power is transmitted via the second power transmission path PT2 (the CVT 24) in the power transmission system 16. At this time, rotation of the drive wheels 14 is transmitted to the counter gear 54, via the differential device 38, reduction gear device 34, output gear 56, etc. Also, the two-way clutch TWC is placed in the one-way mode, so that rotation of the counter gear 54 is interrupted by the two-way clutch TWC, and the rotation is not transmitted to the gear mechanism 28. Accordingly, even when the vehicle speed V becomes a high speed, rotation is not transmitted to the gear mechanism 28, and the rotational speed of the gear mechanism 28 is prevented from being high during traveling at a high vehicle speed.

When the shift controller 122 determines a downshift and switches the traveling mode to the gear traveling mode (corresponding to the D1 position), during traveling in the belt traveling mode (corresponding to the D2 position) with the operating position POSsh being the D position, it outputs a command to release the second clutch C2 and engage the first clutch C1 to the hydraulic control circuit 46. As a result, the power transmission path PT in the power transmission system 16 is switched from the second power transmission path PT2 to the first power transmission path PT1. Thus, the shift controller 122 downshifts the power transmission system 16, by switching the traveling mode from the belt traveling mode in which power is transmitted via the second power transmission path PT2, to the gear traveling mode in which power is transmitted via the first power transmission path PT1, through stepped shift control by releasing the second clutch C2 and engaging the first clutch C1.

When the operating position POSsh is switched from the D position to the M1 position, and from the M2 position to the M1 position, the switching involves switching of the two-way clutch TWC from the one-way mode to the lock mode. The switching of the operating position POSsh from the D position to the M1 position, and switching from the M2 position to the M1 position, are favorably executed when the driver needs engine braking force during coasting.

When there is a rotational speed difference between the input rotational speed Ntwcin of the input-side rotary member 68 and the output rotational speed Ntwcout of the output-side rotary member 70 (the first output-side rotary member 70a and the second output-side rotary member 70b) in the two-way clutch TWC, shock may be generated due to collision of the input-side rotary member 68 with one end of each second strut 72b, in a transition period of switching to the lock mode. Also, the durability may be reduced due to collision between the input-side rotary member 68 and the second struts 72b.

To solve the above problems, when the operating position POSsh is switched to the M1 position during traveling in the D position or the M2 position, the shift controller 122 switches the two-way clutch TWC to the lock mode, after making the input rotational speed Ntwcin of the input-side rotary member 68 of the two-way clutch TWC substantially equal to the output rotational speed Ntwcout of the output-side rotary member 70. In the following, control performed when the operating position POSsh is switched from the D position or the M2 position to the M1 position will be described.

The shift controller 122 functionally includes a switching determining unit 126, condition satisfaction determining unit 128, engagement state determining unit 130, and synchronization determining unit 132. The engine controller 120 and the shift controller 122 constitute the electronic control unit of the invention.

The switching determining unit 126 determines whether the operating position POSsh has been switched to the M1 position by the driver, during traveling with the operating position POSsh being the D position or the M2 position. The operating position POSsh is switched to the M1 position, when the driver requires an engine brake to be applied. Namely, switching of the operating position POSsh to the M1 position indicates that a request for forming a gear stage that ensures an engine brake has been generated. When the operating position POSsh is switched to the M1 position, the two-way clutch TWC is switched to the lock mode; thus, the switching determining unit 126 has a function of determining whether a shift request to form a shift stage in which the two-way clutch TWC is switched to the lock mode has been generated.

When the switching determining unit 126 determines switching to the M1 position, the condition satisfaction determining unit 128 determines whether the vehicle is in the driven state in which rotation is transmitted from the drive wheels 14, based on the accelerator operation amount θacc that is equal to zero. Further, the condition satisfaction determining unit 128 determines whether the input rotational speed Ntwcin of the input-side rotary member 68 is lower than the output rotational speed Ntwout of the output-side rotary member 70. More specifically, the condition satisfaction determining unit 128 determines whether a rotational speed difference ΔNtwc (=Ntwcout-Ntwcin) between the output rotational speed Ntwcout of the output-side rotary member 70 and the input rotational speed Ntwcin of the input-side rotary member 68 is larger than a preset lock control determination threshold value α1 (Ntwcout-Ntwcin>α1).

The lock control determination threshold value α1 (which will be referred to as "threshold value α1") is a value empirically obtained or computed in design in advance, and is set to a threshold value within a range in which shock generated in a transition period of switching of the two-way clutch TWC to the lock mode is not transmitted to the driver, and the durability of the two-way clutch TWC is not reduced, when the two-way clutch TWC is switched to the lock mode with the rotational speed difference ΔNtwc. The threshold value α1 is set to about 100 rpm, for example. Accordingly, shock may be generated, when switching of the two-way clutch TWC to the lock mode is executed in a condition where the rotational speed difference ΔNtwc is larger than the threshold value α1.

When the condition satisfaction determining unit 128 determines that the vehicle 10 is in the driven state, and the rotational speed difference ΔNtwc is larger than the threshold value α1, the engagement state determining unit 130 determines whether the first clutch C1 is in the engaged state. When the engagement state determining unit 130 determines that the first clutch C1 is in the released state, the shift controller 122 performs so-called clutch-to-clutch control for releasing the second clutch C2, and engaging the first clutch C1.

Once the clutch-to-clutch control is started, the engine controller 120 causes the engine control unit 42 to perform torque increase control of the engine 12. When the engagement state determining unit 130 determines that the first clutch C1 is in the engaged state, too, the engine controller 120 causes the engine control unit 42 to perform torque increase control of the engine 12. With the torque increase control of the engine 12 thus executed, the input rotational speed Ntwcin of the input-side rotary member 68 is raised or increased by torque of the engine 12. The torque increase control of the engine 12 may be started at the same time as a point in time at which the first clutch C1 starts being engaged. However, since the input rotational speed Ntwcin is not increased even if the torque increase control of the engine 12 is performed, in a condition where the torque capacity of the first clutch C1 is equal to zero, the torque increase control may be started after a lapse of a given delay time from the time when the first clutch C1 starts being engaged.

The engine controller 120 sets a target engine torque Tet that is set in advance under torque increase control, and outputs a command to control the engine 12 so as to achieve the target engine torque Tet, to the engine control unit 42. The torque increase control of the engine 12 is performed so as to raise the input rotational speed Ntwcin of the input-side rotary member 68 of the two-way clutch TWC, to the output rotational speed Ntwcout of the output-side rotary member 70. The target engine torque Tet set under the torque increase control is empirically obtained or computed in design in advance, and is set to a value where the input rotational speed Ntwcin increases at a given rate of increase ΔNtwcin, and reaches the output rotational speed Ntwcout. The target engine torque Tet may be changed as needed, according to the rotational speed difference ΔNtwc between the input rotational speed Ntwcin and the output rotational speed Ntwcout at the time when the torque increase control of the engine 12 is started, for example.

When the rotational speed difference ΔNtwc between the output rotational speed Ntwcout and the input rotational speed Ntwcin becomes equal to or smaller than a preset torque increase end determination threshold value α2 (which will be called "threshold value α2"), the engine controller 120 finishes torque increase control of the engine 12. The threshold value α2 is empirically obtained or computed in design in advance, and is set to a value where the input rotational speed Ntwcin is predicted to reach the output rotational speed Ntwcout, or become equal to the output rotational speed Ntwcout, when a predetermined time elapses from the end of the torque increase control. The threshold value α2 is set to a larger value than a synchronization determination threshold value α3 that is set in advance so as to determine synchronization of the input rotational speed Ntwcin, as will be described later.

The synchronization determining unit 132 determines whether the input rotational speed Ntwcin has become substantially equal to the output rotational speed Ntwcout, by determining whether the rotational speed difference ΔNtwc between the output rotational speed Ntwcout of the output-side rotary member 70 and the input rotational speed Ntwcin of the input-side rotary member 68 has become equal to or smaller than the preset synchronization determination threshold value α3, after the end of the torque increase control of the engine 12. The synchronization determination threshold value α3 is empirically obtained or computed in design in advance, and is set to a value where it can be determined that the input rotational speed Ntwcin has become substantially equal to the output rotational speed Ntwcout. Whether the input rotational speed Ntwcin has become substantially equal to the output rotational speed Ntwcout may be determined based on whether a predetermined time has elapsed from a point in time at which the input rotational speed Ntwcin started increasing (or from the end of the torque increase control of the engine 12).

When the synchronization determining unit 132 determines that the rotational speed difference ΔNtwc has become equal to or smaller than the synchronization determination threshold value α3, the shift controller 122 outputs a command to switch the two-way clutch TWC to the lock mode, to the hydraulic control circuit 46. The hydraulic actuator 41 is activated in response to the command, and the two-way clutch TWC is switched to the lock mode. Thus, the two-way clutch TWC is switched to the lock mode, after the input rotational speed Ntwcin becomes substantially equal to the output rotational speed Ntwcout, so that shock generated in the switching transition period is reduced, and the durability of the two-way clutch TWC is less likely to be reduced.

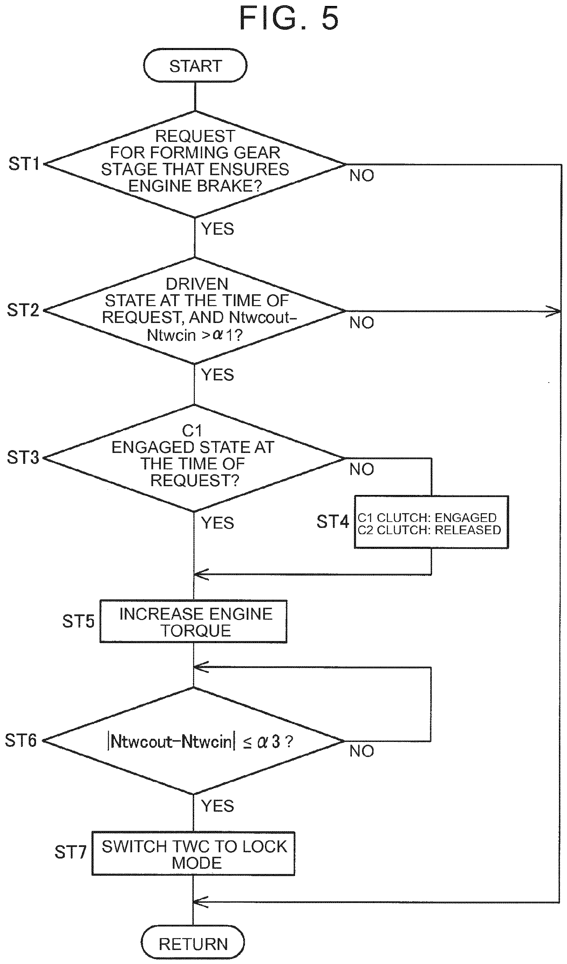

FIG. 5 is a flowchart illustrating a principal part of control operation of the electronic control unit 100, namely, control operation performed when the operating position POSsh is switched to the M1 position, during traveling with the operating position POSsh being the D position or the M2 position. A control routine illustrated in this flowchart is repeatedly executed during vehicle traveling.

Initially, in step ST1, the switching determining unit 126 determines whether a request for forming a gear stage that ensures an engine brake has been generated, based on whether the operating position POSsh has been switched from the D position or the M2 position to the M1 position. When a negative decision (NO) is obtained in step ST1, the current cycle of this routine ends. When an affirmative decision (YES) is obtained in step ST1, the condition satisfaction determining unit 128 determines in step ST2 whether the vehicle 10 is in the driven state, and the rotational speed difference ΔNtwc (=Ntwcout-Ntwcin) is larger than the threshold value α1. When a negative decision (NO) is obtained in step ST2, the current cycle of this routine ends. When an affirmative decision (YES) is obtained in step ST2, the engagement state determining unit 130 determines in step ST3 whether the first clutch C1 is in the engaged state. When a negative decision (NO) is obtained in step ST3, the shift controller 122 starts so-called clutch-to-clutch control to release the second clutch C2, and engage the first clutch C1, in step ST4, and the control proceeds to step ST5. When an affirmative decision (YES) is obtained in step ST3, too, the control proceeds to step ST5.

In step ST5, the engine controller 120 starts torque increase control of the engine 12. The torque increase control of the engine 12 continues to be performed until the rotational speed difference ΔNtwc between the output rotational speed Ntwcout of the output-side rotary member 70 and the input rotational speed Ntwcin of the input-side rotary member 68 becomes equal to or smaller than the threshold value α2. In step ST6, the synchronization determining unit 132 determines whether the rotational speed difference ΔNtwc between the output rotational speed Ntwcout and the input rotational speed Ntwcin has become equal to or smaller than the synchronization determination threshold value α3. Step ST6 is repeatedly executed until the rotational speed difference ΔNtwc becomes equal to or smaller than the synchronization determination threshold value α3. When the rotational speed difference ΔNtwc becomes equal to or smaller than the synchronization determination threshold value α3, an affirmative decision (YES) is obtained in step ST6, and the shift controller 122 executes switching of the two-way clutch TWC to the lock mode in step ST7. At this time, since the rotational speed difference ΔNtwc is equal to or smaller than the synchronization determination threshold value α3, shock generated in the transition period of switching of the two-way clutch TWC to the lock mode is reduced. Also, since the two-way clutch TWC is switched to the lock mode, the engine 12 is rotated in accordance with rotation transmitted from the drive wheels 14, so that an engine brake is generated.

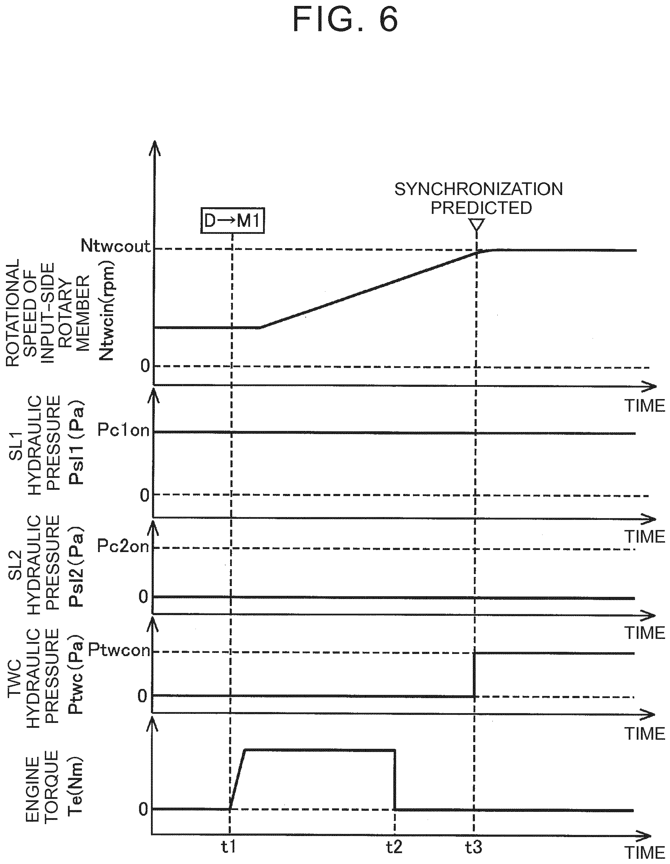

FIG. 6 is a time chart indicating control results based on the flowchart of FIG. 5. FIG. 6 shows the case where the driver switches the operating position POSsh to the M1 position so as to ensure an engine brake, while the vehicle is traveling in the driven state where the operating position POSsh is the D position, and the accelerator operation amount θacc is equal to zero. The D position of the operating position of FIG. 6 corresponds to the D1 position in which the first clutch C1 is engaged as shown in FIG. 4.

In FIG. 6, the vertical axis indicates the input rotational speed Ntwcin of the input-side rotary member 68, SL1 hydraulic pressure Psl1 for controlling the torque capacity of the first clutch C1, SL2 hydraulic pressure Psl2 for controlling the torque capacity of the second clutch C2, TWC hydraulic pressure Ptwc for switching the mode of the two-way clutch TWC, and engine torque Te, which are arranged in this order as seen from the above. In FIG. 6, when the SL1 hydraulic pressure Psl1 becomes equal to a hydraulic pressure Pc1on, the first clutch C1 is placed in the engaged state. When the SL2 hydraulic pressure Psl2 becomes equal to a hydraulic pressure Pc2on, the second clutch C2 is placed in the engaged state. When the TWC hydraulic pressure Ptwc becomes equal to a hydraulic pressure Ptwcon, the two-way clutch TWC is switched to the lock mode. The SL1 hydraulic pressure Psl1, SL2 hydraulic pressure Psl2, and TWC hydraulic pressure Ptwc shown in FIG. 6 are command pressures, and the actual hydraulic pressure follows each of the command pressures with a certain delay.

When the operating position POSsh is switched by the driver from the D position to the M1 position that ensures an engine brake, at time t1 shown in FIG. 6, torque increase control of the engine 12 for making the input rotational speed Ntwcin substantially equal to the output rotational speed Ntwcout is started, under conditions that the vehicle 10 is in the driven state, and the rotational speed difference ΔNtwc between the output rotational speed Ntwcout of the output-side rotary member 70 and the input rotational speed Ntwcin of the input-side rotary member 68 is larger than the threshold value α1.

When the rotational speed difference ΔNtwc between the output rotational speed Ntwcout and the input rotational speed Ntwcin becomes equal to or smaller than the threshold value α2, at time t2 in FIG. 6, the torque increase control of the engine 12 is finished. Even if the torque increase control of the engine 12 ends at time t2, the input rotational speed Ntwcin keeps increasing due to the force of inertia, though the rate of increase of the input rotational speed Ntwcin is reduced. When it is determined, at time t3, that the rotational speed difference ΔNtwc between the output rotational speed Ntwcout and the input rotational speed Ntwcin has become equal to or smaller than the synchronization determination threshold value α3, the TWC hydraulic pressure Ptwc (command pressure) is raised to the hydraulic pressure Ptwcon at which the two-way clutch TWC can be switched to the lock mode. At this time, the rotational speed difference ΔNtwc between the output rotational speed Ntwcout and input rotational speed Ntwcin of the two-way clutch TWC is equal to or smaller than the synchronization determination threshold value α3; thus, since the output rotational speed Ntwcout is substantially equal to the input rotational speed Ntwcin, shock generated in a transition period of switching to the lock mode is reduced.

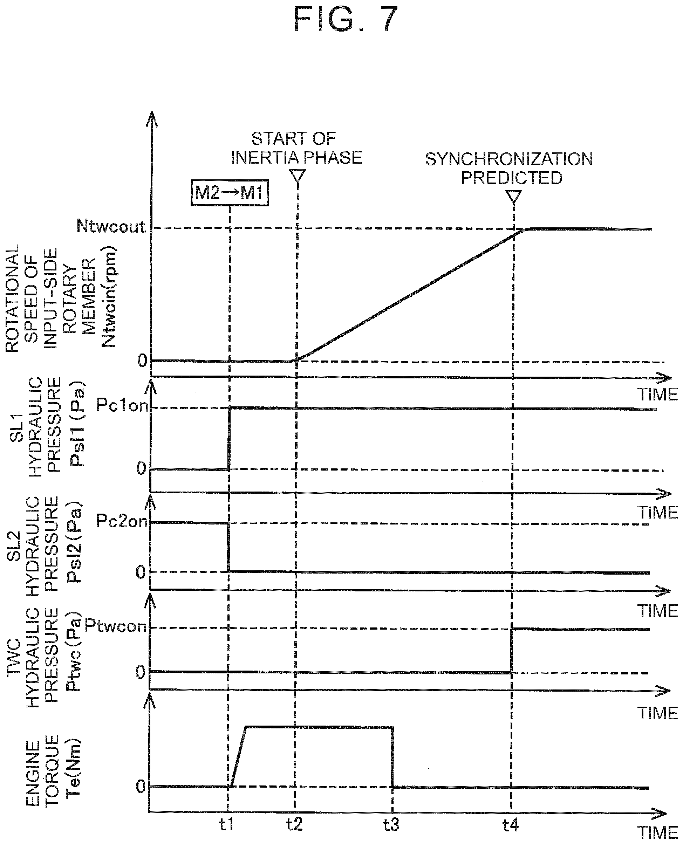

FIG. 7 is another time chart indicating control results based on the flowchart of FIG. 5. FIG. 7 shows the case where the operating position POSsh is switched by the driver to the M1 position so as to ensure an engine brake, while the vehicle is traveling in the driven state where the operating position POSsh is the M2 position, and the accelerator operation amount θacc is equal to zero.

When the operating position POSsh is switched by the driver from the M2 position to the M1 position in which an engine brake is ensured, at time t1 shown in FIG. 7, control for making the input rotational speed Ntwcin of the input-side rotary member 68 substantially equal to the output rotational speed Ntwcout of the output-side rotary member 70 is started, under conditions that the vehicle 10 is in the driven state at time t1, and the rotational speed difference ΔNtwc between the output rotational speed Ntwcout and the input rotational speed Ntwcin is larger than the threshold value α1.

Since the second clutch C2 is engaged at time t1, clutch-to-clutch control for releasing the second clutch C2 and engaging the first clutch C1 is started at time t1. As shown in FIG. 7, a target value (command pressure) of the SL1 hydraulic pressure Psl1 corresponding to the torque capacity of the first clutch C1 is set to the engaging pressure Pc1on at which the first clutch C1 is engaged, and a target value (command pressure) of the SL2 hydraulic pressure Psl2 corresponding to the torque capacity of the second clutch C2 is set to zero. As a result, the first clutch C1 is controlled to the engaged side, and the second clutch C2 is controlled to the release side. While the SL1 hydraulic pressure Psl1 (command pressure) and the SL2 hydraulic pressure Psl2 (command pressure) are changed stepwise in FIG. 7, these hydraulic pressures Psl1, Psl2 are actually controlled so that no shock is generated in a transition period of engagement of the first clutch C1 and release of the second clutch C2. Also, at the same time as time t1, or after a lapse of a predetermined time from time t1, torque increase control of the engine 12 is started. For example, the torque increase control of the engine 12 is started, at a point in time at which the first clutch C1 is predicted to start having a torque capacity, for example.

At time t2, the first clutch C1 has a certain torque capacity, so that the input rotational speed Ntwcin of the input-side rotary member 68 increases, under the torque increase control of the engine 12. At time t3, the rotational speed difference ΔNtwc between the output rotational speed Ntwcout and the input rotational speed Ntwcin becomes equal to or smaller than the threshold value α2, and therefore, the torque increase control of the engine 12 is finished. Even if the torque increase control of the engine 12 ends, the input rotational speed Ntwcin of the input-side rotary member 68 keeps increasing due to the force of inertia. At time t4, the rotational speed difference ΔNtwc becomes equal to or smaller than the synchronization determination threshold value α3, so that the two-way clutch TWC is switched to the lock mode. More specifically, the TWC hydraulic pressure Ptwc is controlled to the hydraulic pressure Ptwcon. At this time, since the rotational speed difference ΔNtwc between the output rotational speed Ntwcout and the input rotational speed Ntwcin is equal to or smaller than the synchronization determination threshold value α3, shock generated in the transition period of switching to the lock mode is reduced.

As described above, according to this embodiment, when a shift request to form a shift stage in which the two-way clutch TWC is switched to the lock mode is generated, in the case where the input rotational speed Ntwcin of the input-side rotary member 68 is lower than the output rotational speed Ntwcout of the output-side rotary member 70 in the two-way clutch TWC, the two-way clutch TWC is switched to the lock mode, after the input rotational speed Ntwcin of the input-side rotary member 68 is made substantially equal to the output rotational speed Ntwcout of the output-side rotary member 70. Thus, shock generated in the transition period of switching of the two-way clutch TWC to the lock mode can be reduced.

Also, according to this embodiment, when a shift request to form a shift stage in which the two-way clutch TWC is switched to the lock mode is generated, the first clutch C1 is engaged, so that power can be transmitted via the first clutch C1. In this condition, the torque increase control of the engine 12 is performed, so that the engine torque Te of the engine 12 is transmitted to the input-side rotary member 68 of the two-way clutch TWC via the first clutch C1, and the input rotational speed Ntwcin is increased. As a result, the input rotational speed Ntwcin of the input-side rotary member 68 can be made substantially equal to the output rotational speed Ntwcout of the output-side rotary member 70. On the other hand, when the first clutch C1 is engaged at the time when the shift request is generated, the input rotational speed Ntwcin of the input-side rotary member 68 can be raised by the engine torque Te of the engine 12. It is thus possible to make the input rotational speed Ntwcin of the input-side rotary member 68 substantially equal to the output rotational speed Ntwcout of the output-side rotary member 70, by executing the torque increase control of the engine 12.

Next, other embodiments of the invention will be described. In the following description, the same reference numerals are assigned to portions or components common to the above embodiment, and these portions or components will not be further described.

In the above embodiment, the input rotational speed Ntwcin of the input-side rotary member 68 is raised through the torque increase control of the engine 12. However, if the time at which the input rotational speed Ntwcin becomes equal to the output rotational speed Ntwcout deviates from a target point in time, due to variations in the engine torque Te, the rotational speed difference ΔNtwc in the transition period of switching of the two-way clutch TWC to the lock mode is increased, which may result in increase of shock. For example, when the rate of increase ΔNtwcin of the input rotational speed Ntwcin is increased, the input rotational speed Ntwcin reaches the output rotational speed Ntwcout, before the two-way clutch TWC is switched to the lock mode. At this time, torque applied to the drive wheels side via the two-way clutch TWC may be transmitted to the drive wheels 14, and shock may be generated.

Thus, in this embodiment, when the first clutch is in the engaged state at the time when the two-way clutch TWC is switched to the lock mode, the torque capacity of the first clutch C1 is temporarily reduced, immediately before switching of the two-way clutch TWC to the lock mode, so that shock generated in the transition period of switching of the two-way clutch TWC to the lock mode is reduced, even when there are variations in the engine torque Te of the engine 12. In the following, a control example of this embodiment will be described.

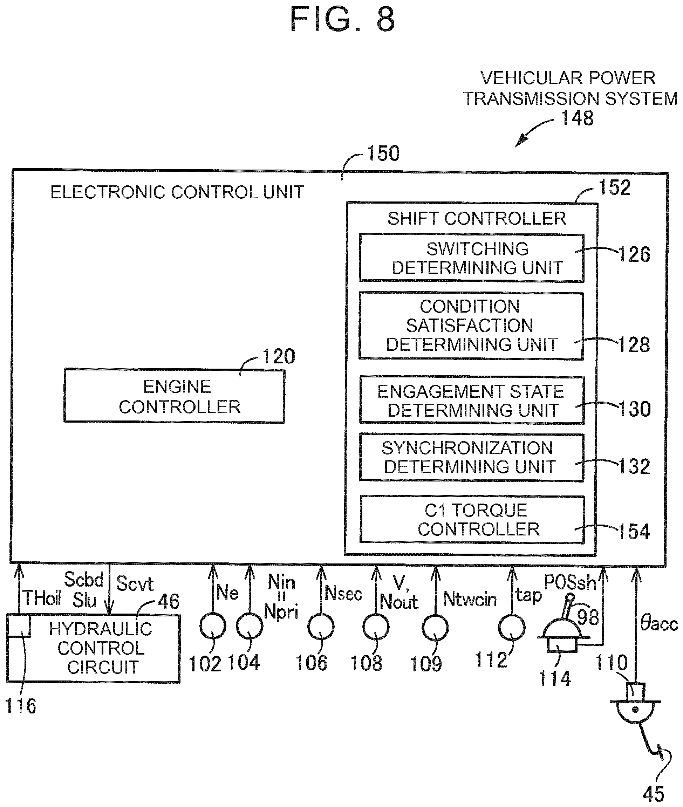

FIG. 8 is a function block diagram illustrating control functions of an electronic control unit 150 that controls a vehicular power transmission system 148 of this embodiment. The configuration of this embodiment other than the electronic control unit 150 is substantially identical with that of the above embodiment, and therefore, will not be described.

A shift controller 152 of this embodiment functionally includes the switching determining unit 126, condition satisfaction determining unit 128, engagement state determining unit 130, synchronization determining unit 132, and a C1 torque controller 154. The functions of the switching determining unit 126, condition satisfaction determining unit 128, engagement state determining unit 130, and synchronization determining unit 132 are basically identical with those of the above embodiment, and therefore, will not be described. The engine controller 120 and the shift controller 152 (C1 torque controller 154) constitute the electronic control unit of the invention.

When the torque increase control of the engine 12 by the engine controller 120 is finished, the C1 torque controller 154 calculates the rotational speed difference ΔNtwc (=Ntwcout-Ntwcin) between the output rotational speed Ntwout of the output-side rotary member 70 and the input rotational speed Ntwcin of the input-side rotary member 68, and determines whether the calculated rotational speed difference ΔNtwc is equal to or smaller than a preset threshold value α4 for use immediately before synchronization (which will be called "threshold value α4").

The threshold value α4 is empirically obtained or computed in design in advance, and is set to a value that makes it possible to determine that the present time is immediately before the input rotational speed Ntwcin of the input-side rotary member 68 becomes substantially equal to the output rotational speed Ntwcout of the output-side rotary member 70. The threshold value α4 is set to a value that is larger than the synchronization determination threshold value α3 used for determining that the input rotational speed Ntwcin of the input-side rotary member 68 has become substantially equal to the output rotational speed Ntwcout of the output-side rotary member 70, and is smaller than the threshold value α2 used for determining the end of the torque increase control of the engine 12 (α3 < α4 < α2).

When the C1 torque controller 154 determines that the rotational speed difference ΔNtwc has become equal to or smaller than the threshold value α4, it reduces the torque capacity of the first clutch C1 to zero as a target value. More specifically, the C1 torque controller 154 sets a target value of the SL1 hydraulic pressure Psl1 to zero, for example, and outputs a command to reduce the SL1 hydraulic pressure Psl1 to the hydraulic control circuit 46, so as to reduce the torque capacity of the first clutch C1. The target torque capacity of the first clutch C1 is not necessarily required to be zero. For example, the target torque capacity of the first clutch C1 may be set to a value other than zero, if the value is within a range in which the input rotational speed Ntwcin of the input-side rotary member 68 can be kept increasing, and the driver will not sense shock even in the case where inertia torque generated by a rotary member located upstream of the two-way clutch TWC is transmitted to the drive wheels 14 via the two-way clutch TWC. Also, the torque capacity of the first clutch C1 is not only reduced stepwise, but may be gradually reduced at a given rate.

With the torque capacity of the first clutch C1 thus reduced, when the input rotational speed Ntwcin reaches the output rotational speed Ntwcout, torque transmitted to the drive wheels 14 is reduced, as compared with the case where the first clutch C1 is in the engaged (fully engaged) state, since the torque transmitted to the drive wheels 14 via the first clutch C1 does not exceed the torque capacity of the first clutch C1. Namely, slipping occurs in the first clutch C1, and torque that exceeds the torque capacity of the first clutch C1 is not transmitted to the two-way clutch TWC; therefore, even when torque is transmitted to the drive wheels 14 via the two-way clutch TWC, shock is reduced as compared with the case where the first clutch C1 is in the engaged state.

When the synchronization determining unit 132 determines that the rotational speed difference ΔNtwc between the output rotational speed Ntwcout and the input rotational speed Ntwcin has become equal to or smaller than the synchronization determination threshold value α3, the shift controller 152 starts switching of the two-way clutch TWC to the lock mode. Also, at the same time as the time when the two-way clutch TWC starts being switched to the lock mode, the C1 torque controller 154 executes control for increasing the torque capacity of the first clutch C1. More specifically, the C1 torque controller 154 outputs a command to gradually increase the SL1 hydraulic pressure Psl1 toward the hydraulic pressure Pclon at which the first clutch C1 is placed in the engaged state, to the hydraulic control circuit 46. As a result, the torque capacity of the first clutch C1 is gradually increased, and the first clutch C1 is re-engaged.

The time at which the torque capacity of the first clutch C1 starts being increased is not limited to the same time as the time when the two-way clutch TWC starts being switched to the lock mode. For example, the torque capacity of the first clutch C1 may be increased, after a lapse of a predetermined delay time from the time when the two-way clutch TWC starts being switched to the lock mode. In another example, the torque capacity of the first clutch C1 may be increased, under a condition that the rotational speed difference ΔNtwc (=Ntwcout-Ntwcin) becomes equal to or smaller than a preset threshold value.

Thus, when it is determined that the present time is immediately before the input rotational speed Ntwcin of the input-side rotary member 68 becomes equal to the output rotational speed Ntwcout of the output-side rotary member 70, the torque capacity of the first clutch C1 is temporarily reduced. Thus, even when torque is transmitted to the drive wheels 14 via the two-way clutch TWC, due to variations in the engine torque Te of the engine 12, the torque transmitted to the drive wheels 14 is reduced since slipping occurs in the first clutch C1, resulting in reduction of shock.

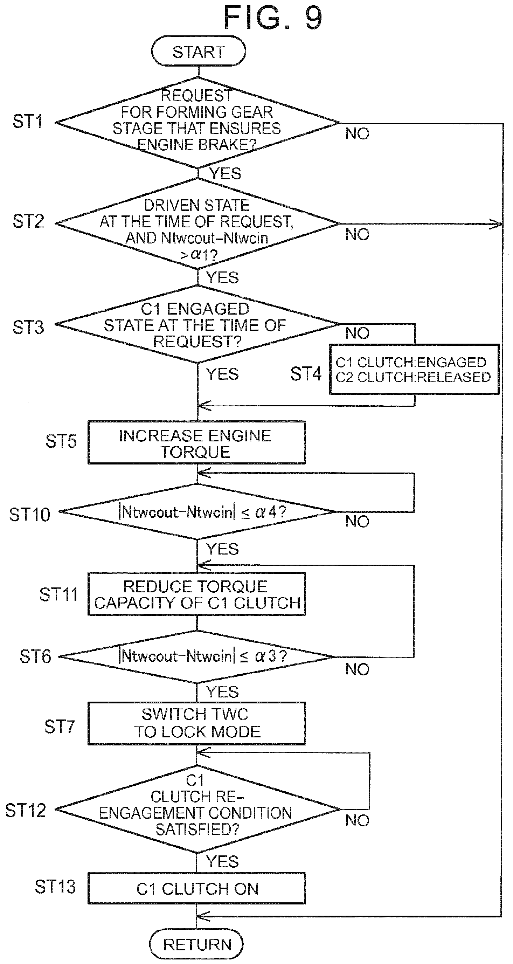

FIG. 9 is a flowchart illustrating a principal part of control operation of the electronic control unit 150, namely, control operation performed when the operating position POSsh is switched to the M1 position, during traveling in the D position or the M2 position. A control routine illustrated in the flowchart of FIG. 9 is repeatedly executed during vehicle traveling.

Initially, in step ST1, the switching determining unit 126 determines whether a request for forming a gear stage that ensures an engine brake has been generated, based on whether the operating position POSsh has been switched from the D position or M2 position to the M1 position. When a negative decision (NO) is obtained in step ST1, the current cycle of this routine ends. When an affirmative decision (YES) is obtained in step ST1, the condition satisfaction determining unit 128 determines in step ST2 whether the vehicle 10 is in the driven state, and the rotational speed difference ΔNtwc (=Ntwcout-Ntwcin) is larger than the threshold value α1. When a negative decision (NO) is obtained in step ST2, the current cycle of this routine ends. When an affirmative decision (YES) is obtained in step ST2, the engagement state determining unit 130 determines in step ST3 whether the first clutch C1 is in the engaged state. When a negative decision (NO) is obtained in step ST3, the shift controller 122 starts so-called clutch-to-clutch control to release the second clutch C2 and engage the first clutch C1 in step ST4, and the control proceeds to step ST5. When an affirmative decision (YES) is obtained in step ST3, too, the control proceeds to step ST5.

In step ST5, the engine controller 120 starts torque increase control of the engine 12. The torque increase control of the engine 12 continues to be performed until the rotational speed difference ΔNtwc between the output rotational speed Ntwcout of the output-side rotary member 70 and the input rotational speed Ntwcin of the input-side rotary member 68 becomes equal to or smaller than the threshold value α2. Then, in step ST10, the C1 torque controller 154 determines whether the present time is immediately before the input rotational speed Ntwcin becomes substantially equal to the output rotational speed Ntwcout, based on whether the rotational speed difference ΔNtwc between the output rotational speed Ntwcout and the input rotational speed Ntwcin has become equal to or smaller than the threshold value α4. Step ST10 is repeatedly executed until the rotational speed difference ΔNtwc becomes equal to or smaller than the threshold value α4. When the rotational speed difference ΔNtwc becomes equal to or smaller than the threshold value α4, the C1 torque controller 154 determines that the present time is immediately before the input rotational speed Ntwcin of the input-side rotary member 68 becomes equal to the output rotational speed Ntwcout of the output-side rotary member 70, and an affirmative decision (YES) is obtained in step ST10. Then, the control proceeds to step ST11.

In step ST11, the C1 torque controller 154 performs control to reduce the torque capacity of the first clutch C1, since the first clutch C1 is in the engaged state, based on step ST3 and step ST4. In step ST6, the synchronization determining unit 132 determines whether the rotational speed difference ΔNtwc between the output rotational speed Ntwcout and the input rotational speed Ntwcin has become equal to or smaller than the synchronization determination threshold value α3. When a negative decision (NO) is obtained in step ST6, the control returns to step ST11, and control to reduce the torque capacity of the first clutch C1 is repeatedly performed. When the rotational speed difference ΔNtwc becomes equal to or smaller than the synchronization determination threshold value α3, the shift controller 152 switches the two-way clutch TWC to the lock mode in step ST7. At this time, since the rotational speed difference ΔNtwc is equal to or smaller than the synchronization determination threshold value α3, shock generated in the transition period of switching of the two-way clutch TWC to the lock mode is reduced or prevented.

Then, in step ST12, the C1 torque controller 154 determines whether a condition for re-engaging the first clutch C1 is satisfied. The first clutch C1 is re-engaged, under a condition that the two-way clutch TWC starts being switched to the lock mode, or a predetermined delay time has elapsed from the start of switching of the two-way clutch TWC to the lock mode, or the rotational speed difference ΔNtwc has become equal to or smaller than a preset threshold value, for example. Step ST12 is repeatedly executed until the condition for re-engaging the first clutch C1 is satisfied. When the condition for re-engaging the first clutch C1 is satisfied, an affirmative decision (YES) is obtained in step ST12, and the first clutch C1 is re-engaged in step ST13 corresponding to a control function of the C1 torque controller 154.

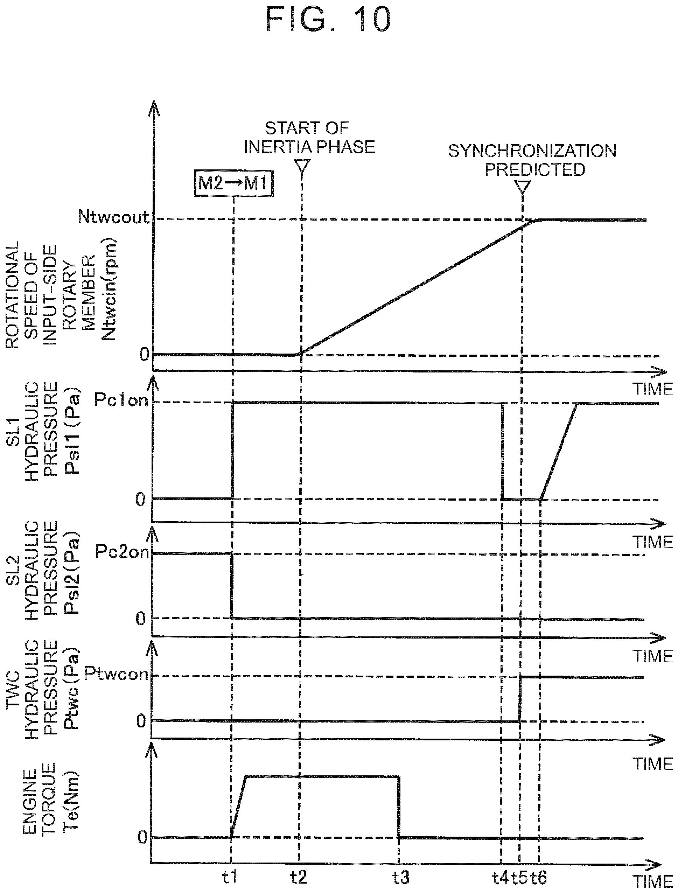

FIG. 10 is a time chart indicating control results based on the flowchart of FIG. 9. FIG. 10 shows the control results in the case where the operating position POSsh is switched by the driver to the M1 position so as to ensure an engine brake, while the operating position POSsh is the M2 position, and the vehicle is traveling in the driven state in which the accelerator operation amount is equal to zero.

When the operating position POSsh is switched by the driver from the M2 position to the M1 position in which an engine brake is ensured, at time t1 shown in FIG. 10, control for making the input rotational speed Ntwcin substantially equal to the output rotational speed Ntwcout is started, under conditions that the vehicle 10 is in the driven state at time t1, and the rotational speed difference ΔNtwc between the output rotational speed Ntwcout of the output-side rotary member 70 and the input rotational speed Ntwcin of the input-side rotary member 68 is larger than the threshold value α1.

Also, at time t1, clutch-to-clutch control for releasing the second clutch C2 and engaging the first clutch C1 is started. As shown in FIG. 10, at time t1, the target value (command pressure) of the SL1 hydraulic pressure Psl1 is set to the engaging pressure Pclon with which the first clutch C1 is engaged, and the target value (command pressure) of the SL2 hydraulic pressure Psl2 is set to zero. As a result, the first clutch C1 is controlled to the engaged side, and the second clutch C2 is controlled to the release side. At the same time, or after a lapse of a predetermined time, torque increase control of the engine 12 is started.

At time t2, the first clutch C1 has a certain torque capacity, so that the input rotational speed Ntwcin of the input-side rotary member 68 increases under the torque increase control of the engine 12. At time t3, the rotational speed difference ΔNtwc between the output rotational speed Ntwcout and the input rotational speed Ntwcin becomes equal to or smaller than the threshold value α2, so that the torque increase control of the engine 12 is finished. The input rotational speed Ntwcin keeps increasing toward the output rotational speed Ntwcout due to the force of inertia, even though the torque increase control of the engine 12 is finished.

At time t4, the rotational speed difference ΔNtwc becomes equal to or smaller than the threshold value α4, so that the present time is determined as being immediately before the input rotational speed Ntwcin becomes substantially equal to the output rotational speed Ntwcout, and the torque capacity of the first clutch C1 starts being reduced. At time t5, the rotational speed difference ΔNtwc becomes equal to or smaller than the synchronization determination threshold value α3, so that the two-way clutch TWC is switched to the lock mode. At this time, since the rotational speed difference ΔNtwc is equal to or smaller than the synchronization determination threshold value α3, shock generated in the transition period of switching to the lock mode is reduced or prevented. Also, even in the case where the input rotational speed Ntwcin reaches the output rotational speed Ntwcout before switching to the lock mode is completed, due to variations in the engine torque Te during torque increase control of the engine 12, and torque is transmitted to the drive wheels 14 via the two-way clutch TWC, the torque transmitted to the drive wheels 14 is reduced, because the torque capacity of the first clutch C1 is reduced in advance, and torque transmitted from the upstream side of the first clutch C1 does not exceed the torque capacity of the first clutch C1. When a condition for re-engaging the first clutch C1 is satisfied at time t6, the torque capacity of the first clutch C1 is gradually increased, and the first clutch C1 is re-engaged.

As described above, according to this embodiment, too, the same effects as those of the above embodiment can be obtained. Further, in this embodiment, the torque capacity of the first clutch C1 is temporarily reduced, immediately before the two-way clutch TWC is switched to the lock mode, so that shock generated in the transition period of switching of the two-way clutch TWC to the lock mode can be further reduced, since torque that exceeds the torque capacity of the first clutch C1 is not transmitted to the two-way clutch TWC. In this connection, the engine torque Te of the engine 12 can be made larger than that in the case where the torque capacity of the first clutch C1 is not reduced; as a result, the switching response can be improved.

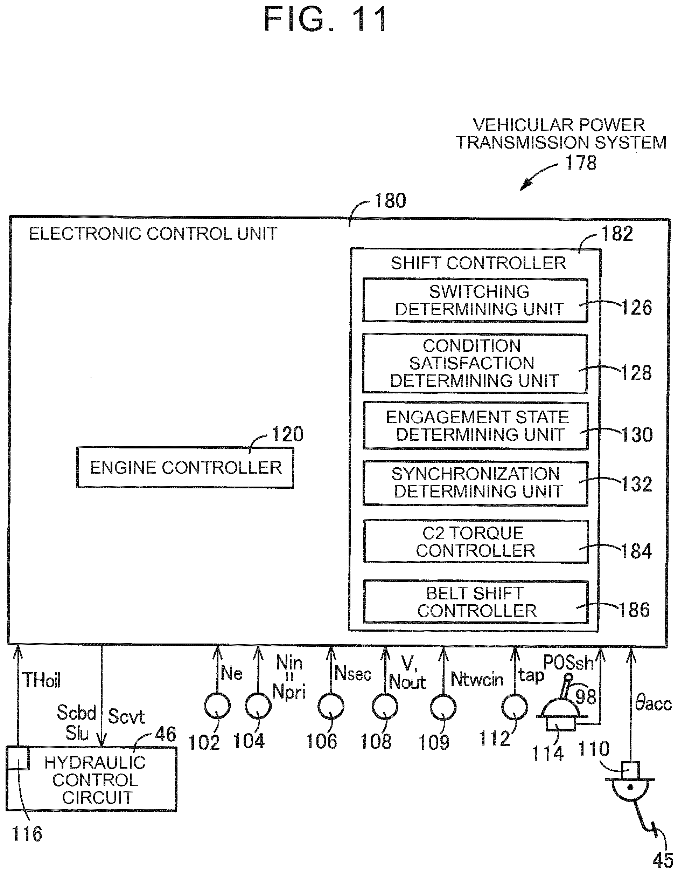

In a third embodiment, when the operating position POSsh is switched to the M1 position, the torque capacity of the second clutch C2 is increased, and an upshift of the CVT 24 is performed, so that the rate of increase ΔNtwcin of the input rotational speed Ntwcin is restricted. As a result, shock generated in a transition period of switching of the two-way clutch TWC to the lock mode is reduced. FIG. 11 is a function block diagram illustrating control functions of an electronic control unit 180 that controls a vehicular power transmission system 178 corresponding to this embodiment. The configuration of this embodiment other than the electronic control unit 180 is substantially identical with that of the above embodiments, and therefore, will not be further described.

A shift controller 182 of this embodiment functionally includes the switching determining unit 126, condition satisfaction determining unit 128, engagement state determining unit 130, synchronization determining unit 132, C2 torque controller 184, and a belt shift controller 186. The functions of the switching determining unit 126, condition satisfaction determining unit 128, engagement state determining unit 130, and synchronization determining unit 132 are basically identical with those of the above embodiments, and therefore, will not be described. The engine controller 120 and the shift controller 182 (the C2 torque controller 184, belt shift controller 186) correspond to the controller of the invention.

The C2 torque controller 184 controls the torque capacity of the second clutch C2, so as to control the rate of increase ΔNtwcin of the input rotational speed Ntwcin of the input-side rotary member 68 which is increased through torque increase control of the engine 12, to an appropriate value. In the torque increase control of the engine 12, the torque is set to a torque value where the input rotational speed Ntwcin reaches the output rotational speed Ntwout. Accordingly, if the rate of increase ΔNtwcin of the input rotational speed Ntwcin becomes larger than a target value, due to variations in the engine torque Te of the engine 12, for example, and the input rotational speed Ntwcin reaches the output rotational speed Ntwcout before switching of the two-way clutch TWC to the lock mode is completed, inertia torque of a rotary member located upstream of the two-way clutch TWC is transmitted to the drive wheels 14 via the two-way clutch TWC, and shock may be generated. To cope with this situation, the C2 torque controller 184 increases the torque capacity of the second clutch C2, so as to restrict the rate of increase ΔNtwcin of the input rotational speed Ntwcin, so that the input rotational speed Ntwcin becomes substantially equal to the output rotational speed Ntwcout at a target point in time, and shock generated in the transition period of switching of the two-way clutch TWC to the lock mode is further reduced.

When the torque increase control of the engine 12 is started, the C2 torque controller 184 controls the SL2 hydraulic pressure Psl2, so as to establish a condition immediately before the second clutch C2 has a torque capacity. Then, when the rotational speed difference ΔNtwc between the output rotational speed Ntwcout of the output-side rotary member 70 and the input rotational speed Ntwcin of the input-side rotary member 68 becomes equal to or smaller than a preset C2 torque increase determination threshold value α5 (which will be called "threshold value α5"), for example, the C2 torque controller 184 outputs a command to increase the SL2 hydraulic pressure Psl2 (command pressure) to the hydraulic control circuit 46, so as to increase the torque capacity of the second clutch C2.

The threshold value α5 is empirically obtained or computed in design in advance, and is set to a suitable value in view of the response of the second clutch C2, etc., so that the rate of increase ΔNtwcin of the input rotational speed Ntwcin can be adjusted, by controlling the torque capacity of the second clutch C2, until the input rotational speed Ntwcin becomes substantially equal to the output rotational speed Ntwcout. The threshold value α5 is smaller than the threshold value α2 used for determining the end of torque increase control of the engine 12, and is larger than the synchronization determination threshold value α3 used for determining whether the input rotational speed Ntwcin reaches the output rotational speed Ntwcout. Thus, the torque capacity of the second clutch C2 is increased, at least before the two-way clutch TWC is switched to the lock mode.

The time at which the torque capacity of the second clutch C2 is increased may be changed as needed to a point in time at which a predetermined time has elapsed from the start of torque increase control of the engine 12, or a point in time at which the rate of increase ΔNtwcin of the input rotational speed Ntwcin is equal to or larger than a threshold value, and the input rotational speed Ntwcin becomes equal to or higher than a threshold value, for example.

The C2 torque controller 184 controls the SL2 hydraulic pressure Psl2, so that the rate of increase ΔNtwcin of the input rotational speed Ntwcin of the input-side rotary member 68 becomes equal to a preset target rate β. As the SL2 hydraulic pressure Psl2 increases, and the second clutch C2 has a torque capacity, force is applied in such a direction as to lower the input rotational speed Ntwcin of the input-side rotary member 68, due to the inertia on the second power transmission path PT2 (the CVT 24) side, and the rate of increase ΔNtwcin is also reduced.

The C2 torque controller 184 calculates the rate of increase ΔNtwcin of the input rotational speed Ntwcin of the input-side rotary member 68 as needed, and increases the SL2 hydraulic pressure Psl2 (command pressure) by a preset fixed value K, when the calculated rate of increase ΔNtwcin is larger than the target rate β. Also, when the rate of increase ΔNtwcin is still larger than the target rate β even after the SL2 hydraulic pressure Psl2 is increased by the fixed value K, the C2 torque controller 184 further increases the SL2 hydraulic pressure Psl2 by the fixed value K. Thus, the C2 torque controller 184 increases the SL2 hydraulic pressure Psl2 stepwise, until the rate of increase ΔNtwcin becomes equal to or smaller than the target rate β. The C2 torque controller 184 stops increasing the SL2 hydraulic pressure Psl2, when the rate of increase ΔNtwcin becomes equal to or smaller than the target rate β.

When the rotational speed difference ΔNtwc between the output rotational speed Ntwcout and the input rotational speed Ntwcin becomes equal to or smaller than a preset C2 release determination threshold value α6 (which will be called "threshold value α6"), the C2 torque controller 184 makes the SL2 hydraulic pressure Psl2 equal to zero, so as to release the second clutch C2. Namely, the C2 torque controller 184 finishes control to increase the torque capacity of the second clutch C2. The threshold value α6 is empirically obtained or computed in design in advance, and is set to such a value that the input rotational speed Ntwcin is predicted to be equal to the output rotational speed Ntwcout after a lapse of a predetermined time. The threshold value α6 is set to a value larger than the synchronization determination threshold value α3 used for determining that the input rotational speed Ntwcin becomes equal to the output rotational speed Ntwcout. Accordingly, the control to increase the torque capacity of the second clutch C2 is finished, before the two-way clutch TWC is switched to the lock mode. The control to increase the torque capacity of the second clutch C2 may also be finished, under a condition that the rate of increase ΔNtwcin of the input rotational speed Ntwcin becomes smaller than a preset given value.

The belt shift controller 186 executes an upshift of the CVT 24 when the torque capacity of the second clutch C2 becomes equal to or larger than a preset given value L. The given value L is larger than zero, and is determined such that the rate of increase ΔNtwcin of the input rotational speed Ntwcin can be reduced through the upshift of the CVT 24. When the CVT 24 is upshifted, the input shaft rotational speed Nin of the input shaft 22 of the CVT 24 is reduced, so that force applied in such a direction as to lower the input rotational speed Ntwcin of the input-side rotary member 68 is increased. Accordingly, it is possible to control the rate of increase ΔNtwcin of the input rotational speed Ntwcin to the target rate β, by causing the belt shift controller 186 to execute an upshift of the CVT 24, in addition to causing the C2 torque controller 184 to increase the torque capacity of the second clutch C2.

The belt shift controller 186 starts upshifting the CVT 24, when the torque capacity of the second clutch C2 becomes equal to or larger than the given value L at which the rate of increase ΔNtwcin of the input rotational speed Ntwcin can be reduced through upshifting of the CVT 24. For example, the belt shift controller 186 starts upshifting the CVT 24, when a preset given time elapses from the time when the torque capacity of the second clutch C2 starts increasing, to the time when the torque capacity of the second clutch C2 is supposed to be equal to or larger than the given value L. The upshift of the CVT 24 may also be started, when the SL2 hydraulic pressure Psl2 (command value) for controlling the second clutch C2 becomes equal to or larger than a preset given value.

The belt shift controller 186 changes the speed ratio ycvt of the CVT 24 to the upshift side by a preset fixed value K2, for example. When the rate of increase ΔNtwcin is still larger than the target rate β even if the speed ratio ycvt of the CVT 24 is reduced by the fixed value K2, the belt shift controller 186 further upshifts the CVT 24 by the fixed value K2. Thus, the belt shift controller 186 reduces the speed ratio ycvt of the CVT 24 stepwise, until the rate of increase ΔNtwcin becomes equal to or smaller than the target rate β. In this manner, the rate of increase ΔNtwcin is limited to the target rate β. Here, the upper limit of upshift of the CVT 24 is set in advance. More specifically, the upper limit is set within a range in which required driving force can be promptly secured, when the operating position POSsh is switched by the driver to the D position or M2 position, during upshifting by the belt shift controller 186. In other words, the CVT 24 is upshifted, so that the rate of increase ΔNtwcin becomes equal to the target rate β, within a range in which required driving force can be promptly secured, in the case where the operating position POSsh is switched to the D position or M2 position.

When the torque capacity of the second clutch C2 is reduced to a value at which an upshift of the CVT 24 does not contribute to reduction of the input rotational speed Ntwcin, the belt shift controller 186 increases the speed ratio ycvt of the CVT 24 to the original speed ratio (e.g., ymax). The reduction of the torque capacity of the second clutch C2 is determined, under a condition that a predetermined time has elapsed from the start of release of the second clutch C2, or a condition that the SL2 hydraulic pressure Psl2 (command pressure) for controlling the second clutch C2 becomes equal to or lower than a predetermined value. To prevent change in the inertia due to a downshift from influencing the behavior of the vehicle 10, the belt shift controller 186 downshifts the CVT 24 so that the speed ratio ycvt gradually changes at given intervals, or downshifts the CVT 24 so as to change the speed ratio ycvt at a given rate.

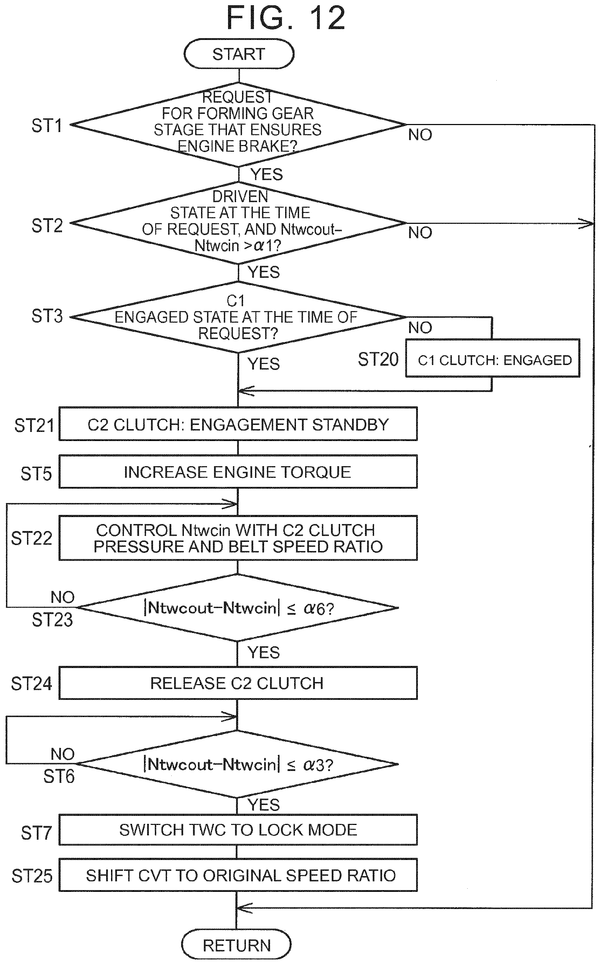

FIG. 12 is a flowchart illustrating a principal part of control operation of the electronic control unit 180, namely, control operation performed when the operating position POSsh is switched to the M1 position, during traveling in the D position or M2 position. A control routine illustrated in the flowchart is repeatedly executed during vehicle traveling.

Initially, in step ST1, the switching determining unit 126 determines whether a request for forming a gear stage that ensures an engine brake has been generated, based on whether the operating position POSsh has been switched from the D position or M2 position to the M1 position. When a negative decision (NO) is obtained in step ST1, the current cycle of this routine ends. When an affirmative decision (YES) is obtained in step ST1, the condition satisfaction determining unit 128 determines in step ST2 whether the vehicle 10 is in the driven state, and the rotational speed difference ΔNtwc (=Ntwcout-Ntwcin) is larger than the threshold value α1. When a negative decision (NO) is obtained in step ST2, the current cycle of this routine ends. When an affirmative decision (YES) is obtained in step ST2, the engagement state determining unit 130 determines in step ST3 whether the first clutch C1 is in the engaged state. When a negative decision (NO) is obtained in step ST3, the first clutch C1 is engaged in step ST20 corresponding to a control function of the shift controller 182.

In step ST21, the shift controller 182 controls the second clutch C2 to establish a condition (engagement standby condition) immediately before the second clutch C2 has a torque capacity, so as to ensure the response of the second clutch C2. Then, in step ST5 corresponding to a control function of the engine controller 120, torque increase control of the engine 12 is started. The torque increase control of the engine 12 continues to be performed until the rotational speed difference ΔNtwc between the output rotational speed Ntwcout and the input rotational speed Ntwcin becomes equal to or smaller than the threshold value α2. In step ST22 corresponding to control functions of the C2 torque controller 184 and the belt shift controller 186, the torque capacity of the second clutch C2 is increased, under a condition that the rotational speed difference ΔNtwc becomes equal to or smaller than the threshold value α5, for example. Further, when the torque capacity of the second clutch C2 becomes equal to or larger than the given value L, an upshift of the CVT 24 is started. Through the increase of the torque capacity of the second clutch C2, and the upshift of the CVT 24, the rate of increase ΔNtwcin of the input rotational speed Ntwcin is controlled to the target rate β.

In step ST23, the C2 torque controller 184 determines whether the rotational speed difference ΔNtwc between the output rotational speed Ntwcout and the input rotational speed Ntwcin has become equal to or smaller than the threshold value α6. When the rotational speed difference ΔNtwc is larger than the threshold value α6, the control returns to step ST22, to repeatedly increase the torque capacity of the second clutch C2, and upshift the CVT 24. When the rotational speed difference ΔNtwc becomes equal to or smaller than the threshold value α6, an affirmative decision (YES) is obtained in step ST23, and the second clutch C2 is released in step ST24 corresponding to a control function of the shift controller 186. In step ST6, the synchronization determining unit 132 determines whether the rotational speed difference ΔNtwc has become equal to or smaller than the synchronization determination threshold value α3. When a negative decision (NO) is obtained in step ST6, step ST6 is repeatedly executed, until the rotational speed difference ΔNtwc becomes equal to or smaller than the synchronization determination threshold value α3. When the rotational speed difference ΔNtwc becomes equal to or smaller than the synchronization determination threshold value α3, an affirmative decision (YES) is obtained in step ST6, and the two-way clutch TWC is switched to the lock mode, in step ST7 corresponding to a control function of the shift controller 186. Since the rotational speed difference ΔNtwc is equal to or smaller than the synchronization determination threshold value α3 at this time, shock generated in the transition period of switching of the two-way clutch TWC to the lock mode is reduced or prevented. In step ST25 corresponding to a control function of the shift controller 186, the speed ratio ycvt of the CVT 24 is increased toward the original speed ratio (ymax), for a downshift.

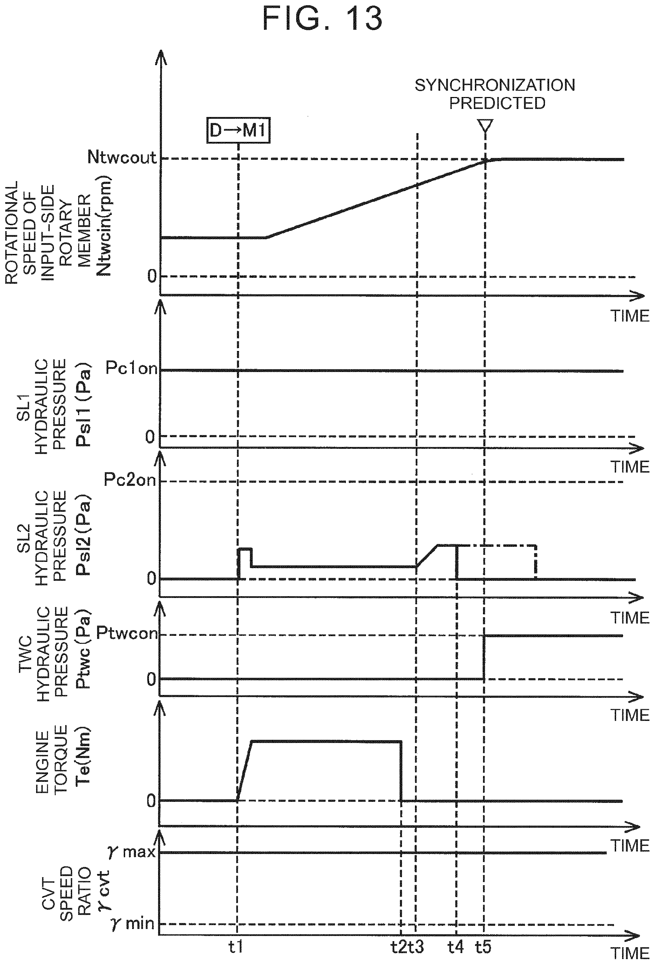

FIG. 13 is one example of a time chart indicating control results based on the flowchart of FIG. 12. FIG. 13 shows control results in the case where the operating position POSsh is switched to the M1 position so as to ensure an engine brake, while the vehicle is traveling in the driven state in which the accelerator operation amount is equal to zero, and the operating position POSsh is the D position.

At time t1 shown in FIG. 13, when the operating position POSsh is switched by the driver from the D position to the M1 position, control for making the input rotational speed Ntwcin of the input-side rotary member 68 substantially equal to the output rotational speed Ntwcout of the output-side rotary member 70 is started, under conditions that the vehicle 10 is in the driven state at time t1, and the rotational speed difference ΔNtwc between the output rotational speed Ntwcout and the input rotational speed Ntwcin is larger than the threshold value α1.

At time t1, the torque increase control of the engine 12 for increasing the input rotational speed Ntwcin is started, and control for increasing the torque capacity of the second clutch C2 is started. In a period between time t1 and time t3, the SL2 hydraulic pressure Psl2 is controlled, so that the second clutch C2 is brought into a condition immediately before it starts having a torque capacity. At time t2, the rotational speed difference ΔNtwc becomes equal to or smaller than the threshold value α2, so that the torque increase control of the engine 12 is finished.

At time t3, the torque capacity of the second clutch C2 is increased, by gradually increasing the SL2 hydraulic pressure Psl2 (command pressure), under a condition that the rotational speed difference ΔNtwc between the output rotational speed Ntwcout and the input rotational speed Ntwcin becomes equal to or smaller than the threshold value α5, for example. With the torque capacity of the second clutch C2 thus increased, the rate of increase ΔNtwcin of the input rotational speed Ntwcin is controlled toward the target rate β.

At time t4, the rotational speed difference ΔNtwc becomes equal to or smaller than the preset threshold value α6, and the SL2 hydraulic pressure Psl2 (command pressure) is made equal to zero, so as to release the second clutch C2. At time t5, the rotational speed difference ΔNtwc becomes equal to or smaller than the synchronization determination threshold value α3; thus, it is determined that the input rotational speed Ntwcin is substantially equal to the output rotational speed Ntwcout, and the TWC hydraulic pressure Ptwc (command pressure) is controlled to Ptwcon, so as to switch the two-way clutch TWC to the lock mode. When the second clutch C2 is at a low pressure level, and there is no concern of tie-up even if release of the second clutch C2 is delayed, the second clutch C2 may be released, after the TWC hydraulic pressure Ptwc is controlled to Ptwcon, as indicated by a one-dot chain line in FIG. 13. In another example, the second clutch C2 may be released when the rate of increase ΔNtwcin of the input rotational speed Ntwcin becomes smaller than a preset given value, for example.

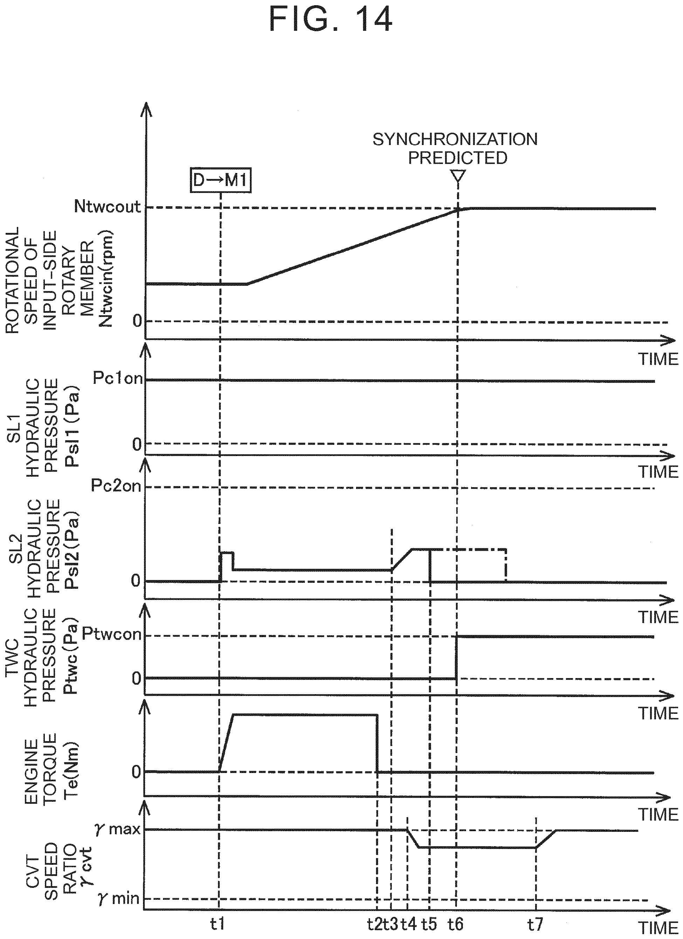

FIG. 14 is one example of a time chart showing control results based on the flowchart of FIG. 12. FIG. 14 shows control results in the case where the operating position POSsh is switched to the M1 position so as to ensure an engine brake, while the vehicle is traveling in the driven state in which the accelerator operation amount θacc is equal to zero, and the operating position POSsh is the D position. In the time chart of FIG. 14, an upshift of the CVT 24 is carried out, in addition to the increase of the torque capacity of the second clutch C2.

At time t1 shown in FIG. 14, when the operating position POSsh is switched by the driver to the M1 position, during traveling in the D position, control for making the input rotational speed Ntwcin of the input-side rotary member 68 substantially equal to the output rotational speed Ntwcout of the output-side rotary member 70 is started, under conditions that the vehicle 10 is in the driven state at time t1, and the rotational speed difference ΔNtwc between the output rotational speed Ntwcout and the input rotational speed Ntwcin is larger than the threshold value α1.

At time t1, torque increase control of the engine 12 for increasing the input rotational speed Ntwcin is started, and control for increasing the torque capacity of the second clutch C2 is started. In a period from time t1 to time t3, the SL2 hydraulic pressure Psl2 is controlled, so that the second clutch C2 is brought into a condition immediately before it starts having a torque capacity. At time t2, the torque increase control of the engine 12 is finished, when the rotational speed difference ΔNtwc becomes equal to or smaller than the threshold value α2, for example.

At time t3, the SL2 hydraulic pressure Psl2 is gradually increased, under a condition that the rotational speed difference ΔNtwc becomes equal to or smaller than the threshold value α5, for example, so that the second clutch C2 starts having a torque capacity. The torque capacity of the second clutch C2 is adjusted, so that the rate of increase ΔNtwcin of the input rotational speed Ntwcin is controlled to the target rate β.

At time t4 when a predetermined time has elapsed from time t3 at which the second clutch C2 starts having a torque capacity, an upshift of the CVT 24 is started. Since the upshift of the CVT 24 is executed, along with the increase of the torque capacity of the second clutch C2, the rate of increase ΔNtwcin of the input rotational speed Ntwcin is also controlled by the upshift of the CVT 24, and the controllability of the input rotational speed Ntwcin is improved. At time t5, the rotational speed difference ΔNtwc becomes equal to or smaller than the threshold value α6, so that the SL2 hydraulic pressure Psl2 is controlled to zero, so as to release the second clutch C2.

At time t6, the rotational speed difference ΔNtwc becomes equal to or smaller than the synchronization determination threshold value α3, so that it is determined that the input rotational speed Ntwcin is substantially equal to the output rotational speed Ntwcout, and the TWC hydraulic pressure Ptwc is controlled to Ptwcon, so as to switch the two-way clutch TWC to the lock mode. At time t7, the torque capacity of the second clutch C2 is made equal to zero, so that the speed ratio γcvt of the CVT 24 is increased toward the original speed ratio (γmax), namely, the CVT 24 is downshifted. In downshifting, the speed ratio γcvt is changed stepwise at intervals of a fixed value, or is gradually increased at a given rate, for example, so that change of the inertia due to the downshift does not influence the behavior of the vehicle 10. When the second clutch C2 is at a low pressure level, and there is no concern of tie-up even if release of the second clutch C2 is delayed, the second clutch C2 may be released, after the TWC hydraulic pressure Ptwc is controlled to Ptwcon, as indicated by a one-dot chain line in FIG. 14.

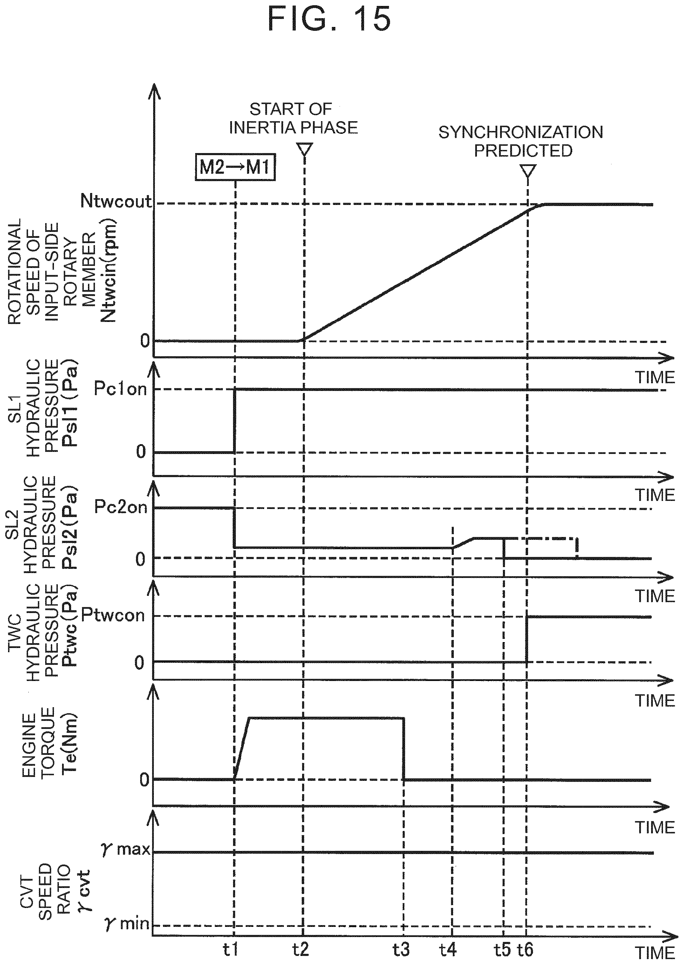

FIG. 15 is one example of a time chart indicating control results based on the flowchart of FIG. 12. FIG. 15 shows control results in the case where the operating position POSsh is switched from the M2 position to the M1 position so as to ensure an engine brake, when the vehicle is in the driven state in which the accelerator operation amount θacc is equal to zero.

At time t1 shown in FIG. 15, when the operating position POSsh is switched by the driver to the M1 position, during traveling in the M2 position, control for making the input rotational speed Ntwcin of the input-side rotary member 68 substantially equal to the output rotational speed Ntwcout of the output-side rotary member 70 is started, under conditions that the vehicle 10 is in the driven state, and the rotational speed difference ΔNtwc between the output rotational speed Ntwcout and the input rotational speed Ntwcin is larger than the threshold value α1.

At time t1, clutch-to-clutch control for engaging the first clutch C1 and releasing the second clutch C2 is started. Also, torque increase control of the engine 12 is started, so as to increase the input rotational speed Ntwcin. In a period from time t1 to time t3, the SL2 hydraulic pressure Psl2 is controlled to a pressure level that provides a condition immediately before the second clutch C2 begins to have a torque capacity.

At time t2, the first clutch C1 has a torque capacity, and the input rotational speed Ntwcin starts increasing (start of the inertia phase), under torque increase control of the engine 12. At time t3, the rotational speed difference ΔNtwc becomes equal to or smaller than the threshold value α2, for example, and the torque increase control of the engine 12 is finished. At time t4, the SL2 hydraulic pressure Psl2 starts being increased, under a condition that the rotational speed difference ΔNtwc becomes equal to or smaller than the threshold value α5. As the SL2 hydraulic pressure Psl2 increases, the second clutch C2 begins to have a torque capacity. At and after time t4, the torque capacity of the second clutch C2 is adjusted, so that the rate of increase ΔNtwcin of the input rotational speed Ntwcin is controlled to the target rate β.

At time t5 when a predetermined time has elapsed from time t4 at which the second clutch C2 begins to have a torque capacity, the rotational speed difference ΔNtwc becomes equal to or smaller than the threshold value α6, and the SL2 hydraulic pressure Psl2 is controlled to zero, so as to release the second clutch C2. At time t6, the rotational speed difference ΔNtwc becomes equal to or smaller than the synchronization determination threshold value α3, so that it is determined that the input rotational speed Ntwcin is substantially equal to the output rotational speed Ntwcout, and the TWC hydraulic pressure Ptwc is controlled to Ptwcon, so as to switch the two-way clutch TWC to the lock mode. When the second clutch C2 is at a low pressure level, and there is no concern of tie-up even if release of the second clutch C2 is delayed, the second clutch C2 may be released after the TWC hydraulic pressure Ptwc is controlled to Ptwcon, as indicated by a one-dot chain line in FIG. 15.

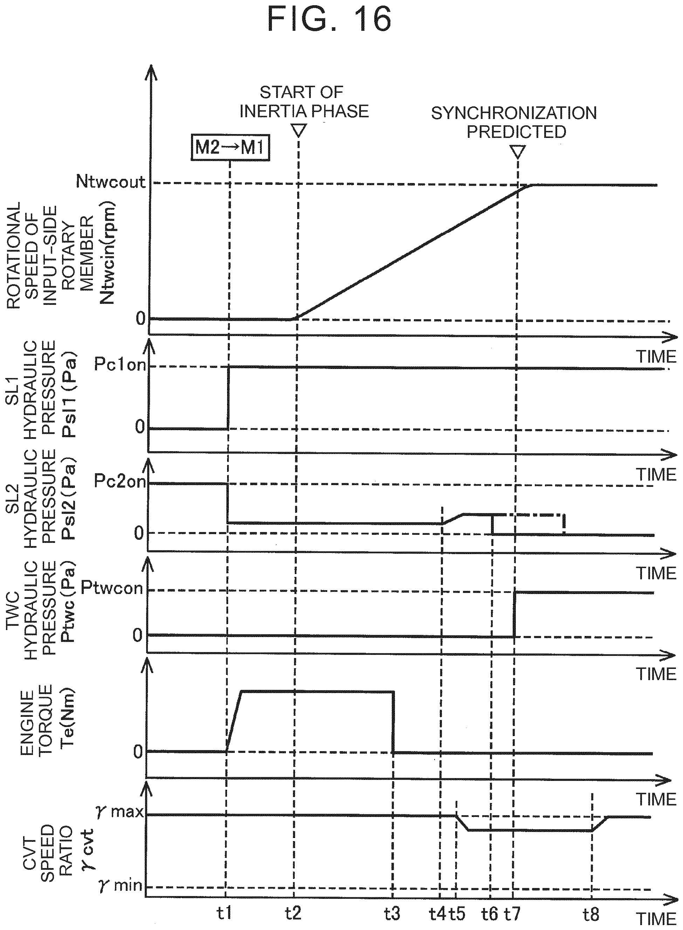

FIG. 16 is one example of a time chart showing control results based on the flowchart of FIG. 12. FIG. 16 shows control results obtained in the case where the operating position POSsh is switched from the M2 position to the M1 position so as to ensure an engine brake, when the vehicle is in the driven state in which the accelerator operation amount θacc is equal to zero. In the time chart of FIG. 16, an upshift of the CVT 24 is carried out, in addition to increase of the torque capacity of the second clutch C2.

At time t1 shown in FIG. 16, when the operating position POSsh is switched by the driver to the M1 position, during traveling in the M2 position, control for making the input rotational speed Ntwcin of the input-side rotary member 68 substantially equal to the output rotational speed Ntwcout of the output-side rotary member 70 is started, under conditions that the vehicle 10 is in the driven state, and the rotational speed difference ΔNtwc between the output rotational speed Ntwcout and the input rotational speed Ntwcin is larger than the threshold value α1.

At time t1, clutch-to-clutch control to engage the first clutch C1 and release the second clutch C2 is started. Also, torque increase control of the engine 12 for increasing the input rotational speed Ntwcin is started. In a period from time t1 to time t3, the SL2 hydraulic pressure Psl2 is controlled to a pressure level that provides a condition immediately before the second clutch C2 begins to have a torque capacity.

At time t2, the first clutch C1 has a torque capacity, and the input rotational speed Ntwcin starts increasing (start of the inertia phase) under the torque increase control of the engine 12. At time t3, the rotational speed difference ΔNtwc becomes equal to or smaller than the threshold value α2, for example, so that the torque increase control of the engine 12 is finished. At time t4, the SL2 hydraulic pressure Psl2 starts being increased, under a condition that the rotational speed difference ΔNtwc becomes equal to or smaller than the threshold value α5, for example. As the SL2 hydraulic pressure Psl2 increases, the second clutch C2 begins to have a torque capacity. At and after time t4, the torque capacity of the second clutch C2 is adjusted, so that the rate of increase ΔNtwcin of the input rotational speed Ntwcin is controlled to the target rate β.

At time t5 at which a predetermined time has elapsed from time t4 at which the second clutch C2 begins to have a torque capacity, an upshift of the CVT 24 is started. Since the upshift of the CVT 24 is carried out, along with the increase of the torque capacity of the second clutch C2, the rate of increase ΔNtwcin of the input rotational speed Ntwcin is also controlled through the upshift of the CVT 24, and the controllability of the input rotational speed Ntwcin is improved. At time t6, the rotational speed difference ΔNtwc becomes equal to or smaller than the threshold value α6, and the SL2 hydraulic pressure Psl2 is controlled to zero, so as to release the second clutch C2. At time t7, the rotational speed difference ΔNtwc becomes equal to or smaller than the synchronization determination threshold value α3, so that it is determined that the input rotational speed Ntwcin is substantially equal to the output rotational speed Ntwcout, and the TWC hydraulic pressure Ptwc is controlled to Ptwcon, so as to switch the two-way clutch TWC to the lock mode. At time t8, the torque capacity of the second clutch C2 becomes equal to zero, and the CVT 24 is downshifted such that the speed ratio γcvt of the CVT 24 is increased toward the original speed ratio (ymax). When the second clutch C2 is at a low pressure level, and there is no concern of tie-up even if release of the second clutch C2 is delayed, the second clutch C2 may be released after the TWC hydraulic pressure Ptwc is controlled to Ptwcon, as indicated by a one-dot chain line in FIG. 16.

As described above, this embodiment also provides the same effects as those of the above embodiments. Also, in this embodiment, the torque capacity of the second clutch C2 is increased, in the engagement transition period of the first clutch C1, before the two-way clutch TWC is switched to the lock mode. In this manner, the rate of increase ΔNtwcin of the input rotational speed Ntwcin of the input-side rotary member 68 is restricted. Thus, the controllability of the input rotational speed Ntwcin is improved, and therefore, shock generated in the transition period of switching of the two-way clutch TWC to the lock mode can be further reduced. Furthermore, the CVT 24 is upshifted when the torque capacity of the second clutch C2 becomes equal to or larger than the given value L, so that the rate of increase ΔNtwcin of the input rotational speed Ntwcin of the input-side rotary member 68 can be restricted. Thus, shock generated in the transition period of switching of the two-way clutch TWC to the lock mode can be further reduced.

While some embodiments of the invention have been described in detail based on the drawings, the invention may be embodied in other forms.

For example, the embodiments as described above are not necessarily implemented independently of one another, but may be combined as needed and implemented. For example, immediately before the input rotational speed Ntwcin of the input-side rotary member 68 becomes equal to the output rotational speed Ntwcout of the output-side rotary member 70, the control for reducing the torque capacity of the first clutch C1 may be performed, and the torque capacity of the second clutch C2 may be increased, so that the rate of increase ΔNtwcin of the input rotational speed Ntwcin is controlled to the target rate β. Further, an upshift of the CVT 24 may be carried out as needed.

In the above embodiments, the two-way clutch TWC is configured to transmit power during forward traveling of the vehicle 10 that is in the driving state, when it is placed in the one-way mode, and is configured to transmit power while the vehicle 10 is in the driving state and in the driven state, when it is placed in the lock mode. However, the two-way clutch of the invention is not necessarily limited to this type. For example, the two-way clutch may be placed in a free mode in which power transmission is interrupted when the vehicle 10 is in the driving state and the driven state, in addition to the one-way mode and the lock mode.

Also, the structure of the two-way clutch TWC is not necessarily limited to that of the above embodiments. For example, the two-way clutch may consist of a first one-way clutch and a second one-way clutch provided as separate members, and the first one-way clutch may be configured to be able to transmit power that acts in the forward direction of the vehicle 10, while the second one-way clutch may be configured to be able to transmit power that acts in the backward direction of the vehicle 10, and the second one-way clutch may be further configured to be able to be switched to a mode in which power that acts in the backward direction of the vehicle 10 is cut off. Also, the first one-way clutch may be configured to be able to be switched to a mode in which power that acts in the vehicle forward direction is cut off. In sum, the structure of the two-way clutch may be changed as needed, provided that it can be switched between the one-way mode and the lock mode.

In the above embodiment, the increase of the torque capacity of the second clutch C2 and the upshift of the CVT 24 lead to reduction of the rate of increase ΔNtwcin of the input rotational speed Ntwcin. Therefore, a step may be added in which the torque capacity of the second clutch C2 is not increased and the CVT 24 is not upshifted when the rate of increase ΔNtwcin is smaller than a lower-limit threshold value.

In the above embodiments, the torque increase control of the engine 12 is performed so as to make the input rotational speed Ntwcin of the input-side rotary member 68 substantially equal to the output rotational speed Ntwcout of the output-side rotary member 70. However, the input rotational speed Ntwcin may be increased by a method other than the torque increase control of the engine 12. For example, an electric motor may be coupled to the input-side rotary member 68 such that power can be transmitted to the rotary member 68, and the input rotational speed Ntwcin may be increased by means of the electric motor, so as to be substantially equal to the output rotational speed Ntwcout. Namely, any arrangement that can increase the input rotational speed Ntwcin and make it substantially equal to the output rotational speed Ntwcout may be employed as needed.

In the above embodiment, an upshift of the CVT 24 is executed when the torque capacity of the second clutch C2 becomes equal to or larger than the given value L. However, the CVT 24 may be upshifted in advance, in a condition where the torque capacity of the second clutch C2 is smaller than the given value L. Namely, this invention may be applied as needed to any system configured to upshift the CVT 24 while increasing the torque capacity of the second clutch C2.

The embodiments as described above are mere exemplary ones, and the invention may be embodied with various changes and improvements, based on the knowledge of those skilled in the art.

## Claims

1. A control apparatus of a power transmission system (16; 148; 178) for a vehicle, the power transmission system (16; 148; 178) including a first power transmission path (PT1) and a second power transmission path (PT2) arranged in parallel with each other between an engine (12) and drive wheels (14), a first clutch (C1) and an auxiliary clutch (TWC) provided on the first power transmission path (PT1), and a continuously variable transmission (24) and a second clutch (C2) provided on the second power transmission path (PT2), the first clutch (C1) being located closer to the engine (12) than the auxiliary clutch (TWC) in the first power transmission path (PT1), the auxiliary clutch (TWC) being a two-way clutch that is switchable at least between a one-way mode and a lock mode, the one-way mode being a mode to transmit power when the vehicle is in a driving state and cut off power when the vehicle is in a driven state, the lock mode being a mode to transmit power when the vehicle is in the driving state and the driven state, and the two-way clutch (TWC) including an input-side rotary member (68) located closer to the engine (12) in the first power transmission path (PT1) and an output-side rotary member (70) located closer to the drive wheels (14) in the first power transmission path (PT1),
the control apparatus comprising an electronic control unit (100; 150; 180) configured to switch the two-way clutch (TWC) to the lock mode, after making an input rotational speed of the input-side rotary member (68) substantially equal to an output rotational speed of the output-side rotary member (70), when a shift request to form a shift stage in which the two-way clutch (TWC) is switched to the lock mode is generated, in a condition where the input rotational speed is lower than the output rotational speed.

2. The control apparatus according to claim 1, wherein
the electronic control unit (100; 150; 180) is configured to engage the first clutch (C1), and execute torque increase control of the engine (12), in a case where the first clutch (C1) is in a released state when the shift request to form the shift stage in which the two-way clutch (TWC) is switched to the lock mode is generated, and
the electronic control unit (100; 150; 180) is configured to execute the torque increase control of the engine (12), in a case where the first clutch (C1) is in an engaged state when the shift request to form the shift stage in which the two-way clutch (TWC) is switched to the lock mode is generated.

3. The control apparatus according to claim 1 or 2, wherein the electronic control unit (150) is configured to temporarily reduce a torque capacity of the first clutch (C1) immediately before switching the two-way clutch (TWC) to the lock mode, in a case where the first clutch (C1) is in the engaged state at a point in time at which the two-way clutch (TWC) is switched to the lock mode.

4. The control apparatus according to claim 1 or 2, wherein the electronic control unit (180) is configured to increase a torque capacity of the second clutch (C2), while the input rotational speed of the input-side rotary member (68) is increasing, before switching the two-way clutch (TWC) to the lock mode.

5. The control apparatus according to claim 4, wherein the electronic control unit (180) is configured to upshift the continuously variable transmission (24), while increasing the torque capacity of the second clutch (C2).

6. The control apparatus according to any one of claims 1 to 5, wherein the electronic control unit (100; 150; 180) is configured to switch the two-way clutch (TWC) to the lock mode, when a rotational speed difference between the output rotational speed of the output-side rotary member (70) and the input rotational speed of the input-side rotary member (68) becomes equal to or smaller than a synchronization determination threshold value that is set in advance for determining whether the input rotational speed is substantially equal to the output rotational speed.
